# EUROPÄISCHE PATENTSCHRIFT

(11) **EP 4 304 815 B1**
(45) Veröffentlichungstag und Bekanntmachung des Hinweises auf die Patenterteilung: **15.01.2025**
(21) Anmeldenummer: 22714409.4
(22) Anmeldetag: 11.03.2022
(51) Int. Cl.: B25J 9/00

(54) **EXTREMITÄTENUNTERSTÜTZUNGSVORRICHTUNG UND VERFAHREN ZUM HEBEN, HALTEN UND/ODER TRAGEN EINER LAST UND/ODER ZUM AUSFÜHREN VON ÜBERKOPFTÄTIGKEITEN**
EXTREMITY-SUPPORTING DEVICE, AND METHOD FOR LIFTING, HOLDING AND/OR CARRYING A LOAD AND/OR FOR PERFORMING OVERHEAD ACTIVITIES
DISPOSITIF DE SUPPORT D'EXTRÉMITÉS ET PROCÉDÉ POUR LEVER, MAINTENIR ET/OU PORTER UNE CHARGE ET/OU POUR EXÉCUTER DES ACTIVITÉS AU-DESSUS DE LA TÊTE

(30) Priorität: 12.03.2021 DE 102021202433
(43) Veröffentlichungstag der Anmeldung: 17.01.2024
(73) Patentinhaber: Fraunhofer-Gesellschaft zur Förderung der angewandten Forschung e.V., 80686 München (DE)
(72) Erfinder: SCHIEBL, Jonas, 70569 Stuttgart (DE); MAUFROY, Christophe, 70569 Stuttgart (DE)
(74) Vertreter: Pfenning, Meinig & Partner mbB
(86) Internationale Anmeldenummer: PCT/EP2022/056399
(87) Internationale Veröffentlichungsnummer: WO 2022/189658

(56) Entgegenhaltungen:
- WO-A1-2016/187275
- DE-A1- 102018 119 754
- DE-A1- 102018 127 553

## Beschreibung

Die Erfindung betrifft eine Extremitätenunterstützungsvorrichtung zur Unterstützung der Bewegung einer Extremität eines Benutzers, in der der Grad der Unterstützung, die ein passiver Aktor bewirkt, mit einem aktiven Aktor einstellbar ist.

Muskel-Skelett-Erkrankungen (MSE) stellen einen hohen Teil der Berufskrankheiten dar und verursachen hohe Produktionsausfallkosten. Häufig resultieren diese aus physischen Belastungen wie schwerer körperlicher Arbeit. Exoskelette und körpergetragene Assistenzsysteme haben das Potential, die resultierenden körperlichen Beanspruchungen zu reduzieren und so den Nutzer zu entlasten. Für die Unterstützung von Überkopfarbeiten, bei denen die Schultern und der Rücken beansprucht werden, existieren eine Vielzahl sogenannter passiver Exoskelette. Diese heben bspw. den Oberarm durch eine vorgespannte Feder an und helfen so die Beanspruchung der Schultermuskulatur zu reduzieren. Kräfte werden durch mechanische Verbindungen teilweise bis zu Hüfte geleitet, wodurch auch der Rücken oftmals entlastet werden kann. Passive Exoskelette können so bei quasi statischen Arbeiten gut unterstützen, wenn der Träger nur kleine Bewegungen mit den Armen (bspw. in einem kleinen Bewegungsbereich über Schulterhöhe) durchführt. Probleme treten jedoch auf, wenn sich die gewünschte Unterstützung ändern soll (bspw. weil von außen eine größere oder kleinere Last auf den Träger wirkt, z.B. bei Werkzeugwechsel) oder bei dynamischeren Tätigkeiten mit größeren Bewegungsbereichen. In diesem Fall muss der Träger seine Arme entgegen der Unterstützungskraft des Exoskeletts nach unten bewegen, was unangenehm ist, auf Dauer stört und v.a. bei größeren Unterstützungsgraden bis weilen sehr anstrengend sein kann, wodurch der Vorteil der Beanspruchungsreduktion eines Exoskeletts verringert wird.

Für Überkopfarbeiten konnte die Problematik reduziert werden, indem bspw. mechanische Verstellmechanismen vorgesehen wurden. Diese können die Federelemente entweder vorspannen und/oder einen Hebelarm zu einem Punkt der angreifenden Kraft so verändern, dass die Unterstützungskraft größer oder kleiner wird. Auch existieren Mechanismen, bei denen der Träger im ungespannten Zustand der Federn (Arme oben) diese auskoppeln kann, wodurch die resultierende Unterstützungskraft minimiert wird (quasi Deaktivierung des Systems). Bei diesen Lösungen kann jedoch der Unterstützungsgrad nicht (oder nur sehr schwer) während der Arbeit angepasst werden.

Um zu gewährleisten, dass eine gewünschte Unterstützung beim Hochheben eintritt, aber kein Widerstand beim Herunterheben der Arme auftritt, wird weltweit an aktiven Unterstützungssystemen geforscht. Dabei werden Motoren aktiviert und übertragen beim Hochheben ein benötigtes Drehmoment, bieten aber beim Herunternehmen der Arme keinen oder nur geringen Widerstand. Aktive Systeme haben jedoch bisher nur vereinzelt den Markteintritt geschafft und dies kann mehrere Gründe haben: So benötigen die Motoren viel Platz und sind aufgrund der hohen geforderten Leistungsdichte schwer. Auch müssen diese ständig aktiviert sein, um auf Bewegungen des Nutzers zu reagieren, was den Stromverbrauch erhöht und so auch das Gewicht der körpergetragenen Energieinfrastruktur (bspw. Akkus). Darüber hinaus befinden sich diese Antriebe zumeist im Bereich der Schulter. Diese Positionierung ist fern des Körperschwerpunktes, was den Eintrag von Drehmomenten in den Körper erhöht und das Gesamtgewicht dadurch vergrößert, dass massivere mechanische Verbindungen zwischen Antrieb und Hüfte nötig sind um Kräfte und Momente zu übertragen. Außerdem spielen sicherheitstechnische Bedenken nach wie vor eine große Rolle, da Antriebsmomente abhängig sind vom eingespeisten elektrischen Strom (der ggf. veränderlich sein kann). Im schlimmsten Fall kann so die Unterstützung stärker sein als der Nutzer selbst und diesem Bewegungen aufzwingen. DE 10 2018 127 553 A1 beschreibt eine Vorrichtung zum Unterstützen wenigstens eines Armes eines Benutzers, wobei die Vorrichtung wenigstens ein Armstützelement mit je einer Armschale zum Anlegen an jeweils einen Arm, wenigstens einen passiven Aktuator, der eingerichtet ist, eine Kraft auf wenigstens eines der Armstützelemente auszuüben, durch die im angelegten Zustand der Vorrichtung eine Aufwärtsbewegung des Arms in der Armschale unterstützt wird, und wenigstens ein Gegenlager für die aufzubringende Kraft aufweist.

Aufgabe der vorliegenden Erfindung ist es, eine Extremitätenunterstützungsvorrichtung und ein mit dieser ausgeführtes Verfahren anzugeben, das eine schnelle Einstellung des Unterstützungsgrades mit geringem Energieaufwand erlaubt und vorzugsweise die vorgenannten Nachteile des Standes der Technik überwindet.

Diese Aufgabe wird gelöst durch die Extremitätenunterstützungsvorrichtung nach Anspruch 1 sowie das Verfahren zum Heben, Halten und/oder Tragen einer Last und/oder zum Ausführen von Überkopftätigkeiten nach Anspruch 13.

Die jeweiligen abhängigen Ansprüche geben vorteilhafte Weiterbildungen der erfindungsgemäßen Extremitätenunterstützungsvorrichtung und des erfindungsgemäßen Verfahrens an.

Die Erfindung betrifft eine Extremitätenunterstützungsvorrichtung zur Unterstützung einer Extremität eines Benutzers. Die Unterstützung kann dabei vorzugsweise beim Heben, Halten und/oder Tragen einer Last und/oder beim Ausführungen von Überkopftätigkeiten erfolgen. Auch eine Unterstützung einer Bewegung der Extremität ist optional möglich. Die Extremitätenunterstützungsvorrichtung kann dabei eine oder mehrere Extremitäten des Benutzers unterstützen. Als Extremitäten kommen ein oder beide Arme und/oder ein oder beide Beine des Benutzers in Frage.

Die Extremitätenunterstützungsvorrichtung weist einen Extremitätenangriff auf, der eingerichtet ist, an der Extremität des Benutzers anzugreifen. Der Extremitätenangriff kann z. B. eine Armanbindung bzw. ein Armangriff oder eine Beinanbindung bzw. ein Beinangriff sein. Im Falle der Unterstützung eines Armes kann der Extremitätenangriff z. B. eine konkave Rinne aufweisen, in die der Arm des Benutzers von oben eingelegt werden kann, und die den Arm dann nach oben, also in Richtung entgegen der Gravitationskraft, unterstützen kann.

Der Extremitätenangriff kann die Extremität auch vollständig umschließen. Hierzu kann er beispielsweise zwei konkave rinnenförmige Elemente aufweisen, deren konkave Vertiefungen die Form einer Zylinderteilfläche haben können und deren Zylinderachsen dabei parallel oder koaxial zueinander verlaufen können. Daneben kann der Extremitätenangriff auch Gurte bzw. Gurtsysteme aufweisen oder daraus bestehen.

Die Extremitätenunterstützungsvorrichtung weist außerdem einen Extremitätenhebel auf, mit dem der Extremitätenangriff über einen Angriffverbindungselement verbunden ist. Das Angriffverbindungselement kann dabei eine oder mehrere Teilelemente aufweisen. In einem einfachen Fall kann das Angriffverbindungselement ein Gelenk sein, über das der Extremitätenangriff mit dem Extremitätenhebel verbunden ist. Eine Gelenkachse dieses Gelenks kann dabei so orientiert sein, dass sie senkrecht steht auf einer Längsrichtung des Extremitätenhebels und durch die Extremität hindurch verläuft, wenn diese im Extremitätenangriff angeordnet ist. In einem anderen einfachen Fall kann das Angriffverbindungselement bspw. ein prismatisches Gelenk sein, welches eine Relativbewegung in Extremitätenhebelrichtung zulässt. Kombinationen mehrerer unterschiedlicher Gelenke bzw. passiver Freiheitsgrad sind hier möglich.

Das Angriffverbindungselement kann auch ein oder mehrere Zugkraftübertragungselemente, wie beispielsweise Seilzüge, Ketten und/oder Riemen, aufweisen, mit denen eine Kraft vom Extremitätenhebel auf den Extremitätenangriff übertragbar ist. Dies kann insbesondere dann vorteilhaft sein, wenn die Extremität ein Bein des Benutzers ist.

Die Extremitätenunterstützungsvorrichtung weist außerdem ein Drehgelenk auf, um das der Extremitätenhebel drehbar ist. Das Drehgelenk kann z. B. an einem optionalen Torsomodul angeordnet sein, so dass dann der Extremitätenhebel um das Drehgelenk relativ zum Torsomodul drehbar ist. Für den Fall, dass die Extremität ein Arm des Benutzers ist, ist es vorteilhaft, wenn das Drehgelenk nahe der Schulter positioniert ist, besonders bevorzugt zeigt eine Drehachse des Drehgelenkes durch das Glenohumeralgelenk des Benutzers. Es ist aber auch möglich, dass das Drehgelenk davor oder dahinter, darüber oder darunter angeordnet ist, abhängig von der spezifischen Verwendung der Extremitätenunterstützungsvorrichtung.

Die Extremitätenunterstützungsvorrichtung weist außerdem ein Zugübertragungselement auf, das am Extremitätenhebel an einer Seite angreift, die dem Angriffverbindungselement bezüglich des Drehgelenks gegenüberliegt. Dies kann so verstanden werden, dass das Zugübertragungselement so am Extremitätenhebel angreift, dass eine dadurch auf den Extremitätenangriff bzw. das Angriffsverbindungselement ausgeübte Kraft der durch das Zugübertragungselement ausgeübten Kraft entgegengerichtet ist. Zum Beispiel könnte ein Zugübertragungselement, das nach unten am Extremitätenhebel angreift, bewirken, dass die Extremität nach oben gedrückt wird. Es sei angemerkt, dass durch dieses Merkmal nicht impliziert wird, dass das Zugübertragungselement unmittelbar am Extremitätenhebel angreift und auch nicht, dass die Drehachse des Drehgelenkes durch den Extremitätenhebel verläuft. Beispielsweise kann das Zugübertragungselement über ein Zwischenelement am Extremitätenhebel angreifen. Auch kann der Extremitätenhebel über ein anderes Zwischenelement mit dem Drehgelenk verbunden sein. Selbst wenn die Achse des Drehgelenks den Extremitätenhebel bzw. den Verlauf dessen Längsachse nicht schneidet, soll eine durch das Zugübertragungselement in eine bestimmte Richtung ausgeübte Kraft eine in entgegengesetzter Richtung wirkende Kraft auf den Extremitätenangriff bewirken. Dies soll als gleichbedeutend mit der Aussage angesehen werden, dass das Zugübertragungselement auf einer dem Angriffsverbindungselement bezüglich des Drehgelenks gegenüberliegenden Seite des Extremitätenhebels am Extremitätenhebel angreift. Anstatt zu sagen, dass das Zugübertragungselement am Extremitätenhebel angreift, kann auch gesagt werden, dass das Zugübertragungselement auf den Extremitätenhebel wirkt. Das Zugübertragungselement kann unmittelbar oder vermittelt über weitere Zwischenelemente am Extremitätenhebel angreifen bzw. auf diesen wirken. Die Seiten des Extremitätenhebels können optional auch unterschieden werden durch eine Ebene, in der die Drehachse des Drehgelenks liegt und die senkrecht zu einer Längsrichtung des Extremitätenhebels steht. Als Längsrichtung des Extremitätenhebels kann beispielsweise jene Richtung definiert werden, in der der Extremitätenhebel die größte Ausdehnung hat. Vorteilhafterweise kann das Zugübertragungselement auf der dem Angriffverbindungselement bzw. der dem Extremitätenangriff bezüglich des Drehgelenks gegenüber liegenden Seite des Extremitätenhebels am Extremitätenhebel befestigt sein.

Die Extremitätenunterstützungsvorrichtung weist außerdem ein Distanzelement auf, das einen Abstand des Zugübertragungselementes vom Drehgelenk am Berührungspunkt des Zugübertragungselementes mit dem Distanzelement in zumindest einer Richtung begrenzt. In optionalen Ausgestaltungen kann das Zugübertragungselement auch direkt am Distanzelement angreifen. In diesem optionalen Fall kann das Distanzelement gerade den Abstand eines Endes des Zugübertragungselementes vom Drehgelenk in beide Richtungen begrenzen.

Die Extremitätenunterstützungsvorrichtung weist außerdem einen Stellmechanismus auf, mit dem ein Abstand des Distanzelementes vom Drehgelenk veränderbar ist. Der Abstand zwischen dem Distanzelement und dem Drehgelenk soll im Folgenden als Distanzelementabstand bezeichnet werden. Das Distanzelement ist also mittels des Stellmechanismus zur Veränderung des Distanzalementabstandes bewegbar. Der Stellmechanismus weist einen Stellaktor auf, mittels dessen eine Kraft zur Veränderung des Distanzelementabstandes auf das Distanzelement ausübbar ist. In einfachen optionalen Ausführungsformen kann der Stellmechanismus gerade der Stellaktor sein.

Der Distanzelementabstand beeinflusst bzw. bestimmt den Grad an Unterstützung, den die Extremitätenunterstützungsvorrichtung auf die Extremität ausübt. Durch den Distanzelementabstand kann daher der Grad der Unterstützung eingestellt werden. Da der Distanzelementabstand durch einen Stellaktor eingestellt werden kann, kann der Unterstützungsgrad schnell und automatisch an die Arbeitssituation des Benutzers angepasst werden.

Der Stellaktor ist dabei vorzugsweise ein aktiver Aktor, dessen Kraftwirkung steuerbar ist. Vorzugsweise kann der Stellaktor automatisch gesteuert werden bzw. steuerbar sein. Hierzu kann er beispielsweise mit einer Steuerung, beispielsweise einer elektronischen Steuerung, verbunden sein, die den Stellaktor automatisch und/oder basierend auf Benutzereingaben betätigt.

In einer vorteilhaften Ausgestaltung der Erfindung kann ein Ende des Zugübertragungselementes, das nicht am Extremitätenhebel angreift, an einem passiven Aktor angreifen, der eingerichtet ist, eine Zugkraft auf das Zugübertragungselement auszuüben. Der passive Aktor kann z. B. eine oder mehrere Federn aufweisen oder sein. Es kann dann mit dem Zugübertragungselement die Zugkraft vom passiven Aktor auf den Extremitätenhebel übertragbar sein.

Unter einem Zugübertragungselement wird hier ein Element verstanden, mit dem eine Zugkraft übertragbar ist, vorzugsweise eine Zugkraft und keine Schub-und/oder keine Scherkräfte. Ist beispielsweise das Zugübertragungselement ein Seil oder Riemen, so kann dieses nur Zugkräfte, aber keine Scher- und keine Druckkräfte übertragen. Ist andererseits das Zugübertragungselement eine Kette, so kann die Übertragung von Druckkräften auch möglich sein. Für die Erfindung kommt es nur darauf an, dass maßgeblich Zugkräfte übertragbar sind.

In einer vorteilhaften Ausgestaltung der Erfindung kann die Extremitätenunterstützungsvorrichtung ein Torsomodul aufweisen, das eingerichtet ist, am Torso des Benutzers anzugreifen. Besonders vorteilhaft ist es dabei, wenn das Torsomodul am Becken des Benutzers angreifen kann. Es kann dann auch als BeckenModul bezeichnet werden. Grundsätzlich kann jedoch das Torsomodul auch an anderen Bereichen angreifen, so kann es beispielsweise auch über Schultergurte vom Benutzer getragen werden oder auf andere Weise am Torso des Benutzers befestigbar sein. Greift das Torsomodul am Becken an, so kann es vorteilhafterweise so ausgestaltet sein, dass es das Becken zumindest teilweise umschließt und besonders vorteilhaft auf dem Becken aufliegt. Das Torsomodul kann als Fixpunkt der Extremitätenunterstützungsvorrichtung angesehen werden, so dass der Extremitätenhebel gegenüber dem Torsomodul um das Drehgelenk drehbar sein kann. Dabei können zwischen dem Drehgelenk und dem Torsomodul weitere Elemente und Gelenke vorgesehen sein.

Vorteilhafterweise kann die Extremitätenunterstützungsvorrichtung ein Führungselement aufweisen, entlang dem das Distanzelement zur Veränderung des Distanzelementabstandes bewegbar ist. Das Führungselement kann also das Distanzelement führen. Das Führungselement kann gegenüber dem Stellmechanismus und/oder ggf. gegenüber dem Torsomodul fixiert und/oder fixierbar sein. Alternativ oder zusätzlich kann auch das Führungselement so ausgestaltet sein, dass der Extremitätenhebel gegenüber dem Führungselement um das Drehgelenk drehbar ist. Es kann in diesem Fall also auch das Führungselement als Fixpunkt der Extremitätenunterstützungsvorrichtung angesehen werden.

In einer vorteilhaften Ausgestaltung kann das Führungselement über ein Gelenk mit dem Stellmechanismus verbunden sein. Dieses Gelenk soll im Folgenden als Führungsgelenk bezeichnet werden. Besonders bevorzugt kann das Führungsgelenk eine Arretierungsvorrichtung aufweisen, mit dem eine Drehung des Führungselementes um das Führungsgelenk arretierbar ist, wodurch zum Beispiel der Winkel des Führungselementes zum Torsomodul veränderbar und einstellbar ist.

Das Führungselement kann besonders bevorzugt eine Schiene oder Nut aufweisen oder sein, in der das Distanzelement bzw. durch die das Distanzelement geführt wird. Die Schiene kann gerade oder gekrümmt, vorzugsweise monoton gekrümmt sein. Unter einer monotonen Krümmung wird hierbei eine Krümmung verstanden, die ihre Richtung nicht ändert. Besonders bevorzugt kann sie streng monoton gekrümmt sein, so dass sie keine geraden Abschnitte aufweist. Auch kann die Schiene jedoch ihre Krümmung im Verlauf ändern. Die Schiene kann vorteilhafterweise zwei parallel zueinander verlaufende Langlöcher oder Nuten aufweist, zwischen denen das Distanzelement angeordnet ist, und das Distanzelement kann auf gegenüberliegenden Seiten jeweils einen Stift, einen Block oder eine Rolle aufweisen, die in das jeweilige Langloch oder die jeweilige Nut eingreifen.

Das Führungselement erlaubt es, eine Bahn vorzugeben, entlang derer sich das Distanzelement bei Veränderung des Distanzelementabstandes bewegt. Hierdurch kann der Verlauf des winkelabhängigen (Abhängigkeit des Winkels des Extremitätenhebels zum Torsomodul) Unterstützungsgrades bei Aktuierung durch den Aktor vorgegeben werden. Insbesondere ist es möglich, den Verlauf des Unterstützungsgrades an die Anwendung anzupassen, in der die Extremitätenunterstützungsvorrichtung zum Einsatz kommt. Zum Beispiel kann auf diese Weise vorgegeben werden, dass sich der Unterstützungsgrad bei Verschiebung des Distanzelements zunächst so ändert, dass der winkelabhängige (Abhängigkeit des Winkels des Extremitätenhebels zum Torsomodul) Unterstützungsgrad sich so verhält als wäre der Winkel des Extremitätenhebels zum Torsomodul klein und später so, als wäre dieser Winkel groß. Jeder andere Verlauf des Unterstützungsgrades kann ebenso vorgegeben werden.

In einer vorteilhaften Ausgestaltung der Erfindung kann das Distanzelement den Abstand des Zugübertragungselementes vom Drehgelenk in Richtung vom Drehgelenk weg begrenzen. Das bedeutet also, dass sich das Zugübertragungselement vom Drehgelenk weg bewegen kann, bis es auf das Distanzelement trifft und vom Distanzelement am Ort der Berührung des Zugübertragungselementes mit dem Distanzelement dann daran gehindert wird, sich weiter vom Drehgelenk zu entfernen. Das Distanzelement kann sich hierzu auf der dem Drehgelenk abgewandten Seite des Zugübertragungselementes befinden. In diesem Fall ist es bevorzugt, wenn durch den Stellmechanismus auf das Distanzelement eine Kraft in Richtung auf das Drehgelenk hin ausübbar ist. Diese Kraft kann also eine Veränderung des Distanzelementabstandes in Richtung auf das Drehgelenk hin bewirken. Die durch den Stellmechanismus ausgeübte Kraft wirkt also vorzugsweise jener Kraft entgegen, die das Zugübertragungselement auf das Distanzelement ausübt, wenn das Distanzelement das Zugübertragungselement an einer weiteren Entfernung vom Drehgelenk hindert.

Es sollen allgemein solche Richtungen als Richtungen von einem Element weg bezeichnet werden, entlang derer sich der Abstand zu dem Element vergrößert. Entsprechend sollen Richtungen in Richtung eines Elementes solche Richtungen sein, entlang derer sich der Abstand zu dem Element verringert. Die Richtungen müssen dabei nicht notwendigerweise radial zu dem Element liegen, sie müssen das Element also nicht zwingend schneiden oder direkt auf dieses zu verlaufen.

Alternativ oder zusätzlich zu vorgenannter Ausgestaltung kann das Distanzelement auch den Abstand des Zugübertragungselementes vom Drehgelenk in Richtung des Drehgelenks begrenzen. Es ist dann vorteilhaft, wenn alternativ oder zusätzlich die durch den Stellmechanismus auf das Distanzelement ausübbare Kraft zur Veränderung des Distanzelementabstandes in Richtung vom Drehgelenk weg ausübbar ist. Diese Ausgestaltung ist insbesondere dann vorteilhaft, wenn der Extremitätenhebel auf der den Extremitätenangriff bzw. das Angriffsverbindungselement aufweisenden Seite mit einem Verbindungselement, das Torsomodul und Drehgelenk verbinden kann, oder dem Stellmechanismus einen sehr kleinen Winkel einschließen kann, da sich dann auf der gegenüber liegenden Seite das Zugübertragungselement dicht an das Drehgelenk begibt. Hierdurch würde ein sehr kleiner Winkel zwischen dem Zugübertragungselement und dem Extremitätenhebel entstehen, wodurch das durch das Zugübertragungselement auf den Extremitätenhebel ausgeübte Drehmoment sehr klein würde. Wird das Zugübertragungselement am Distanzelement auf einem gewissen Mindestabstand vom Drehgelenk gehalten, so wird verhindert, dass der Winkel zwischen Zugübertragungselement und Extremitätenhebel einen bestimmten Betrag unterschreitet. Es kann so gewährleistet werden, dass das Drehmoment nicht zu klein wird. Hierbei ist es vorteilhaft, wenn das Distantzelement in beide Richtungen gehalten wird, wie die weiter unten beschrieben wird.

In einer vorteilhaften Ausgestaltung der Erfindung kann das Zugübertragungselement ein erstes Zugübertragungsteilelement und ein zweites Zugübertragungsteilelement aufweisen. Die Zugübertragungsteilelemente können einzelne Zugkraft übertragende Elemente sein, die zusammen das Zugübertragungselement darstellen, es können aber auch Abschnitte des Zugübertragungselementes sein. Ist beispielsweise das Zugübertragungselement ein Seilzug, eine Kette oder ein Riemen, so können die Zugübertragungsteilelemente auch einfach unterschiedliche Abschnitte des Seilzugs, des Riemens bzw. der Kette sein.

In dieser Ausgestaltung ist es vorteilhaft, wenn das erste und das zweite Zugübertragungsteilelement das Distanzelement auf gegenüberliegenden Seiten passieren. Besonders bevorzugt ist es dabei, wenn das erste und das zweite Zugübertragungselement jeweils so bemessen sind, dass in jeder Stellung des Extremitätenhebels um das Drehelement zumindest eines der Zugübertragungsteilelemente das Distanzelement berührt. Auch hierdurch kann verhindert werden, dass bei sehr kleinen Winkeln zwischen dem Stellmechanismus bzw. dem Verbindungselement, das Torsomodul und Drehgelenk verbinden kann, und dem Extremitätenhebel das durch das Zugübertragungselement auf den Extremitätenhebel ausgeübte Drehmoment zu klein wird. Die Idee ist hierbei, dass, solange der Winkel zwischen Stellmechanismus und Extremitätenhebel oder Verbindungselement groß ist, das zwischen Distanzelement und Drehgelenk verlaufenden Zugübertragungsteilelement das Distanzelement berührt und dass, wenn der Winkel kleiner wird, das dem Drehelement bezüglich des Distanzelements gegenüber liegende Zugübertragungsteilelement das Distanzelement berührt. Dieses hat dann einen größeren Winkel zum Extremitätenhebel, so dass verhindert werden kann, dass das Drehmoment zu klein wird.

Vorteilhafterweise kann das Distanzelement jeweils eine Rolle für jede Richtung aufweisen, in die es den Abstand des Zugübertragungselementes vom Drehgelenk begrenzt. Das Zugübertragungselement kann dabei die jeweilige Rolle, während diese den Abstand begrenzt, an jener Seite berühren, die der Richtung entgegengesetzt ist, in der die jeweilige Rolle den Abstand des Zugübertragungselementes vom Drehgelenk begrenzt. Vereinfacht gesprochen kann in diesem Fall das Zugübertragungselement zwischen dem Drehgelenk und dem Distanzelement verlaufen, wenn das Distanzelement den Abstand in Richtung vom Drehgelenk weg begrenzt und außen am Distanzelement vorbei verlaufen, wenn das Distanzelement den Abstand in Richtung des Drehgelenks begrenzt.

Vorzugsweise steht eine Drehachse der jeweiligen Rolle parallel zur Drehachse des Drehgelenkes. Allgemein ist es bevorzugt, wenn die Richtung, in der der Distanzelementabstand veränderbar ist, senkrecht steht zur Drehachse des Drehgelenks. Vorzugsweise verläuft das Zugübertragungselement in Richtungen, die senkrecht zur Drehachse des Drehgelenks stehen. Bevorzugt verlaufen die Längsrichtung des Extremitätenhebels, das Zugübertragungselement und die Richtung der Verschiebung des Distanzelementes zur Veränderung des Distanzelementabstandes sowie auch der Distanzelementabstand selbst in einer Ebene, auf der die Drehachse des Drehgelenks senkrecht steht.

In einer vorteilhaften Ausgestaltung der Erfindung kann das Drehgelenk mit dem Stellmechanismus über ein Verbindungselement fest verbunden sein, das so ausgestaltet sein kann, dass es, wenn die Extremitätenunterstützungsvorrichtung vom Benutzer bestimmungsgemäß getragen wird, entlang des Torsos des Benutzers verläuft. Das Verbindungselement kann vorteilhafterweise länglich und besonders bevorzugt gerade ausgestaltet sein. Es muss nicht parallel zum Torso verlaufen. Ist das Verbindungselement gerade ausgestaltet, so kann es z. B. mit einer zur Wirbelsäule des Benutzers parallelen Geraden einen spitzen Winkel einschließen. Ist ein Torsomodul vorgesehen, so kann das Verbindungselement mit einer Seite an dem Torsomodul angeordnet sein, vorzugsweise über ein oder mehrere Gelenke. Die Gelenke können eine Drehung des Verbindungselementes gegenüber dem Torsomodul um ein, zwei oder drei Drehachsen ermöglichen. Optional kann das Verbindungselement auch um seine Längsachse drehbar sein oder eine Achse, die entlang des Torsos des Benutzers verläuft. Durch die Drehgelenke wird es möglich, dass der Benutzer die unterstützte Extremität in den Winkelfreiheitsgraden, die nicht unterstützt werden, frei bewegen kann.

Die Extremitätenunterstützungsvorrichtung kann vorteilhafterweise eingerichtet sein, zwei der Extremitäten des Benutzers zu unterstützen, zum Beispiel beide Arme. In diesem Fall kann die Extremitätenunterstützungsvorrichtung für jede Extremität die genannten Elemente aufweisen, also insbesondere den Extremitätenangriff, das Angriffverbindungselement, das Drehgelenk, das Zugübertragungselement, das Distanzelement und den Stellmechanismus mit dem Stellaktor. Sofern ein Torsomodul vorgesehen ist, sind vorzugsweise die Bestandteile für jede Extremität an dem gleichen Torsomodul angeordnet. Eine Extremitätenunterstützungsvorrichtung, die zwei der Extremitäten unterstützt, hat also vorzugsweise genau ein Torsomodul. Im Fall einer Unterstützung von einem oder beiden Armen greift vorzugsweise das jeweilige Verbindungselement seitlich und/oder hinten am Torsomodul an. Bei Unterstützung beider Arme kann also das Torsomodul zwischen den beiden Verbindungselementen für die beiden Arme angeordnet sein.

Ist das Zugübertragungselement mit einem passiven Aktor wie oben beschrieben verbunden, so kann der passive Aktor ebenfalls am Verbindungselement, vorzugsweise an dessen dem Extremitätenhebel abgewandten Ende angeordnet sein. Besonders bevorzugt kann zwischen dem Verbindungselement und dem passiven Aktor ein Drehgelenk oder Kugelgelenk vorgesehen sein. Hierdurch kann der passive Aktor dem Zugübertragungselement folgen, wenn dies seinen Abstand zum Drehgelenk ändert.

In einer vorteilhaften Ausgestaltung kann der Stellaktor am Extremitätenhebel angeordnet sein. Er ist dann vorzugsweise auf der gleichen Seite bezüglich des Drehgelenks angeordnet, wie der Extremitätenangriff bzw. das Angriffsverbindungselement. Eine Kraftwirkungsrichtung des Stellaktors ist dann vorzugsweise parallel zu der Längsrichtung des Extremitätenhebels dort, wo der Stellaktor angeordnet ist. In dieser Ausgestaltung kann das Zugübertragungselement am Distanzelement befestigt sein und dort enden. Das Distanzelement kann in dieser Ausgestaltung entlang des Extremitätenhebels verschiebbar sein und beispielsweise in diesem angeordnet sein. Zum Beispiel kann das Distanzelement in einer Führungsschiene geführt sein, die im Extremitätenhebel verläuft und optional parallel zu seiner Längsrichtung liegt. In dieser Ausgestaltung kann auch der Stellaktor direkt mit dem Distanzelement verbunden sein. Dabei wäre mit dem Distanzelement ein beweglicher Teil des Stellaktors verbunden, also jener Teil, der bei Aktuierung gegenüber der Extremitätenunterstützungsvorrichtung bzw. dem Extremitätenhebel linear bewegt wird.

In einer vorteilhaften Ausgestaltung kann der Stellaktor einen Drehantrieb aufweisen sowie eine durch den Drehantrieb drehbare Spindelwelle, auch als Gewindespindel bezeichnet. Auf der Spindelwelle kann dabei eine Spindelmutter angeordnet sein, die auf der Spindelwelle laufen kann. Durch Drehung des Drehantriebs wird also die Spindelmutter auf der Spindelwelle verschoben. Es kann dann die Kraft auf das Distanzelement durch die Spindelmutter bewirkt werden. Hierzu kann das Distanzelement direkt oder über vermittelnde Elemente mit der Spindelmutter verbunden sein. Ein solcher Stellaktor erlaubt eine sehr präzise Steuerung des Distanzelementabstandes.

In einer vorteilhaften Ausgestaltung der Erfindung kann der Stellaktor einen Drehantrieb und eine Spindelwelle aufweisen, die nebeneinander und mit zueinander parallelen Drehachsen angeordnet sind und die über ein Zahnradgetriebe miteinander kinematisch verbunden sind. Dadurch, dass der Drehantrieb und die Welle nebeneinander angeordnet sind, kann die erforderliche Länge des Stellmechanismus verringert werden.

Bevorzugterweise kann der Stellmechanismus zumindest ein elastisches Element aufweisen, beispielsweise ein Federelement, das so angeordnet ist, dass es durch den Stellaktor auslenkbar ist und eine Kraft bewirkt, die jener durch den Stellaktor ausübbaren und die Veränderung des Distanzelementabstandes bewirkenden Kraft entgegen gerichtet ist. Das elastische Element kann also so angeordnet und ausgestaltet sein, dass es durch die Kraftwirkung des Stellaktors gegen seine Rückstellkraft auslenkbar ist, also im Falle beispielsweise einer Zugfeder spannbar ist oder im Falle einer Druckfeder komprimierbar ist. Bevorzugterweise kann das zumindest eine elastische Element einerseits mit jenem Element des Stellaktors verbunden sein, der durch Aktuierung des Aktors linear bewegt wird und zum anderen an einem Bauteil enden, das das Drehgelenk trägt und/oder fest gegenüber dem Drehgelenk ist. Besonders bevorzugt können das elastische Element und/oder die Richtung seiner Kraftwirkung parallel liegen zur Längsrichtung des oben beschriebenen Verbindungselementes, sofern dies vorgesehen ist. Besonders vorteilhaft sind zwei oder mehr der elastischen Elemente vorgesehen, die bezüglich einer Geraden, entlang derer sich der linear bewegliche Teil des Stellaktors bewegt, gegenüber liegend angeordnet sind und deren gemeinsame resultierende Kraftwirkungslinie vorzugsweise mit der Kraftwirkungslinie aller resultierenden Kräfte auf den linear beweglichen Teil des Stellaktors (bspw. Kräfte, die durch Drehung der Spindel oder durch Kräfte der Stellzugelemente (19 ) auf den beweglichen Teil des Stellaktors bewirkt werden) auf einer Geraden liegt. Hierdurch kann eine Momentwirkung und somit eine Verkantung des Stellaktors verhindert werden. Insbesondere ist es vorteilhaft, wenn jenes nicht mit dem Stellaktor verbundene Ende des elastischen Elementes mit dem Verbindungselement fest verbunden ist, sofern dies vorgesehen ist. Das Vorhersehen eines derartigen elastischen Elementes erlaubt es, einen bestimmten Unterstützungsgrad durch Aktuierung des Aktors und der damit verbundenen Verschiebung des Distanzelementes einzustellen und diese Einstellung sehr schnell und ohne weiteren Energieaufwand aufzuheben, da hierzu die Kraftwirkung des elastischen Elementes ausreichend ist. Wird die Kraftwirkung des Stellaktors aufgehoben, so bewirkt das zumindest eine elastische Element, dass sich das Distanzelement in den Ausgangszustand zurück begibt. Ist der Aktor, wie oben beschrieben, als Spindelwelle mit Spindelmutter ausgestaltet, so kann vorzugsweise ein Ende des zumindest einen elastischen Elementes an der Spindelmutter befestigt sein.

In einer vorteilhaften Ausgestaltung der Erfindung kann der Stellaktor einen Drehantrieb sowie einen Linearisierungsmechanismus aufweisen, mit dem ein vom Drehantrieb bewirktes Drehmoment in eine lineare Kraft zur Veränderung des Distanzelementabstandes übertragbar ist. Die oben beschriebene Ausgestaltung mit einer Spindelwelle und Spindelmutter ist hierfür ein Beispiel. Besonders bevorzugt weist der Stellaktor dabei außerdem eine Kupplung auf, mit der die Übertragung des Drehmoments in die lineare Kraft herstellbar und lösbar ist. Durch eine solche Kupplung ist es möglich, mit dem Stellaktor das Distanzelement in eine bestimmte Position zu bewegen und dadurch einen bestimmten Unterstützungsgrad einzustellen. Die Unterstützung kann dann einfach dadurch beendet werden, dass die Kupplung gelöst wird. Das Distanzelement kann sich dann unter Wirkung beispielsweise der elastischen Elemente in seine Ausgangsposition zurückbegeben, ohne dabei den Drehantrieb drehen zu müssen. Hierdurch kann eine sehr schnelle Rückstellung erreicht werden. Die Kupplung ist besonders vorteilhaft in Verbindung mit zumindest einem der elastischen Elemente, da dieses bei Öffnen der Kupplung das Distanzelement entgegen der Auslenkung durch den Stellaktor zurückbewegen kann. Vorteilhafterweise kann der Stellmechanismus zumindest ein Blockierelement aufweisen, mit dem der Distanzelementabstand blockierbar ist. Dieses Blockierelement kann z. B. so verwendet werden, dass zunächst durch Kraftwirkung des Stellaktors das Distanzelement in einen gewünschten Distanzelementabstand bewegt wird und dann das Blockierelement aktiviert wird, um den Distanzelementabstand zu fixieren. Im Fall, dass das Blockierelement im blockierenden Zustand keine Energie benötigt (bspw. Permanentmagnetbremse) kann der Distanzelementabstand und damit der Unterstützungsgrad fixiert werden, ohne dass hierfür Energie aufgewendet werden müsste, wodurch das ganze System mit einem definierten Unterstützungsgrad unterstützen kann, ohne Energie zu verbrauchen. Der Stellaktor kann also deaktiviert werden. Um das Distanzelement in eine Ausgangsposition zurückzubewegen reicht es, das Blockierelement zu lösen und optional ggf. die Kupplung zu lösen. Unter Wirkung der Kraft durch das zumindest eine elastische Element oder im einfachsten Fall durch das Zugübertragungselement kann sich das Distanzelement von selbst in seinen Ausgangszustand zurückbewegen.

In einer vorteilhaften Ausgestaltung der erfindungsgemäßen Extremitätenunterstützungsvorrichtung kann der Stellmechanismus ein erstes Stellzugübertragungselement aufweisen. Unter einem Stellzugübertragungselement soll hierbei ein Element verstanden werden, das zumindest Zugkräfte und in optionalen Ausgestaltungen auch ausschließlich Zugkräfte übertragen kann. Es ist also optional möglich, dass das Stellzugübertragungselement auch Druckkräfte übertragen kann, dies ist jedoch nicht erforderlich. Zum Beispiel gibt es auch Seile und kettenartige Verbindungen die auch geringfügige Druckkräfte übertragen können, was vorteilhaft sein kann. Das hier beschriebene erste Stellzugübertragungselement kann mit einem Ende mit dem Stellaktor derart verbunden sein, dass durch den Stellaktor eine Zugkraft auf dieses erste Stellzugübertragungselement ausübbar ist. Mit seinem gegenüberliegenden Ende kann das erste Stellzugübertragungselement mit dem Distanzelement so kontaktiert sein, dass mit dem ersten Stellzugübertragungselement die Kraft zur Veränderung des Distanzelementabstandes auf das Distanzelement ausübbar ist. Optional kann das erste Stellzugübertragungselement in seinem Verlauf vom Stellaktor zum Distanzelement zumindest ein Umlenkelement passieren, an dem es die Richtung seines Verlaufs ändern kann, besonders bevorzugt in Richtung des Distanzelementes. Es ist dabei vorteilhaft, aber nicht erforderlich, dass das erste Stellzugübertragungselement die Richtung seines Verlaufs direkt auf das Distanzelement hin ändert. Es ist auch möglich, dass es seinen Verlauf nur an die Richtung auf das Distanzelement hin annähert und im weiteren Verlauf durch beispielsweise weitere Umlenkelemente weiter in Richtung des Distanzelementes geführt wird. Das oder die Umlenkelemente können z. B. Rollen sein, über die das Stellzugübertragungselement verläuft. Durch ein derartiges Stellzugübertragungselement ist es möglich, den Stellaktor frei zu positionieren. Insbesondere ist es nicht erforderlich, dass der Stellaktor in jene Richtung wirkt, in der das Distanzelement verschiebbar sein soll. Besonders vorteilhaft ist diese Ausgestaltung, wenn der Stellaktor mit seiner linearen Kraftwirkungsrichtung parallel liegt zum vorstehend beschriebenen Verbindungselement.

In einer vorteilhaften Ausgestaltung kann das Stellzugübertragungselement einen Seilzug oder eine Litze aufweisen, der bzw. die zumindest in einem Teil seines Verlaufes in einer Bowdenzughülle verläuft. Hierdurch kann der Stellaktor weitgehend beliebig am Körper des Benutzers angeordnet werden. Über das Stellzugübertragungselement kann dann die Kraft zur Veränderung des Distanzelementabstandes zum Distanzelement übertragen werden, vorzugsweise als Zugkraft. Bei Vorhandensein eines Führungselementes greift das Stellzugübertragungselement dabei vorzugsweise so am Distanzelement an, dass das Seil bzw. die Litze am Angriffspunkt parallel verläuft zur Richtung des Führungselements. Dabei kann das Stellzugübertragungselement vorteilhaft von jener dem Drehgelenk zugewandten Seite und/oder jenem dem Drehgelenk abgewandten Seite an dem Distanzelement angreifen. Durch die Bowdenzughülle kann es auf die entsprechende Seite geführt werden. Vorteilhafterweise kann der Stellaktor in dieser Ausgestaltung bei bestimmungsgemäßer Verwendung der Extremitätenunterstützungsvorrichtung am Rücken des Benutzers angeordnet sein, vorzugweise auf Hüft- oder Rückenhöhe. Sie kann aber alternativ z.B. auch am Bauch oder an einem Bein des Benutzers angeordnet sein.

Das Seil bzw. die Litze kann vorteilhaft auch abschnittsweise in einer Bowdenzughülle geführt sein und in anderen Abschnitten über eine oder mehrere Rollen geführt sein, durch die sein Verlauf umgelenkt wird.

Vorteilhafterweise kann der Stellmechanismus ein weiteres Stellzugübertragungselement aufweisen, das ebenfalls mit dem Distanzelement verbunden ist, aber auf einer dem ersten Stellzugübertragungselement gegenüber liegenden Seite. Auf diese Weise kann das weitere Stellzugübertragungselement eine Zugkraft auf das Distanzelement ausüben, die jener durch das erste Stellzugübertragungselement ausgeübten Zugkraft entgegengerichtet ist. Zusammen kann das erste und das weitere Stellzugübertragungselement das Distanzelement in beide Richtungen entlang des Distanzelementabstandes verschieben und vorzugsweise in einer definierten Position halten. Vorteilhafterweise ist das weitere Stellzugübertragungselement mit dem Stellaktor derart verbunden, dass durch den Stellaktor eine Zugkraft auf das weitere Stellzugübertragungselement ausübbar ist, die der auf das erste Stellzugübertragungselement ausübbaren Zugkraft entgegengerichtet ist. Bewegt sich also das linear bewegliche Element des Stellaktors in eine Richtung, so zieht er an einem der beiden Stellzugübertragungselemente und bewegt er sich in die entgegengesetzte Richtung, so zieht er an dem anderen der beiden Stellzugübertragungselemente. Vorzugsweise passiert das weitere Stellzugübertragungselement in seinem Verlauf vom Stellaktor zum Distanzelement mindestens ein weiteres Umlenkelement, besonders bevorzugt zwei weitere Umlenkelemente, an dem oder denen das weitere Stellzugübertragungselement die Richtung seines Verlaufs in Richtung des Distanzelementes ändert. Das zu dem ersten Stellzugübertragungselement Gesagte gilt hierbei analog. Durch das weitere Stellzugelement ist es möglich, das Distanzelement in beide Richtungen zu ziehen und dann in einer festen Position zu halten. Es sei angemerkt, dass das erste und das weitere Stellzugübertragungselement auch als Teile eines gemeinsamen, ringförmig geschlossenen Stellzugübertragungselementes realisiert sein können.

In einer vorteilhaften Ausgestaltung der Erfindung kann der Stellaktor einen Drehantrieb aufweisen sowie zumindest eine durch den Drehantrieb drehbare Rolle. Das erste und/oder das weitere Stellzugübertragungselement, sofern vorhanden, können an einer Oberfläche der Rolle oder an Oberflächen jeweils einer Rolle befestigt sein, so dass sie durch eine Drehung der Rolle auf die Rolle aufwickelbar und/oder von der Rolle abwickelbar sind. Ist für jedes Stellzugübertragungselement jeweils eine Rolle vorgesehen, so sind diese vorzugsweise auf einer gemeinsamen Achse angeordnet und werden gemeinsam gedreht. Vorteilhafterweise kann die zumindest eine Rolle über eine Kupplung mit dem Drehantrieb verbunden sein, durch die eine Drehmomentübertragung vom Drehantrieb auf die Rolle lösbar und herstellbar ist. Auch hier kann durch Lösen der Kupplung bewirkt werden, dass sich das Distanzelement von selbst, gegebenenfalls unter Wirkung des zumindest einen elastischen Elementes in seine Ausgangsposition zurück bewegt, ohne dabei den Drehantrieb mitdrehen zu müssen.

In vorteilhaften Ausgestaltungen der Erfindung kann es möglich sein, dass das Distanzelement direkt am Stellaktor fest angeordnet ist. Dabei kann das Distanzelement an dem beweglichen Teil des Stellaktors fest angeordnet sein, also jenem Teil, der eine Linearbewegung ausführen kann. Hierdurch lassen sich Ausgestaltungen mit wenigen Bauteilen realisieren, die dadurch kostengünstiger sind. Dass das Distanzelement direkt am Stellaktor fest angeordnet ist, bedeutet dabei, dass keine Elemente zwischen dem Distanzelement und dem Stellaktor vorgesehen sind, die gegenüber dem Distanzelement und dem Stellaktor beweglich sind. Ist das Distanzelement als Rolle ausgestaltet, so kann eine Drehachse dieser Rolle in dieser Ausgestaltung fest gegenüber dem beweglichen Teil des Stellaktors sein.

In einer vorteilhaften Ausgestaltung der Erfindung kann der Stellmechanismus eine Kegelradverbindung aufweisen. In dieser kann ein erstes Kegelrad durch den Stellaktor antreibbar sein, der in diesem Fall ein Drehantrieb sein kann. Ein zweites Kegelrad kann mit einer Welle verbunden sein, die mit einer Spindelwelle (Gewindespindel) verbunden sein kann, durch deren Drehung auf das Distanzelement die Kraft zur Veränderung des Distanzelementabstandes ausübbar ist. Die Welle kann auch selbst eine Spindelwelle sein. Hierzu kann das Distanzelement z. B. in seinem Inneren oder daran angeschlossen eine Spindelmutter aufweisen, die mit der Spindelwelle im Eingriff ist. Vorteilhafterweise ist eine Drehachse des ersten Kegelrades parallel oder koaxial zu einer Drehachse des Stellaktors, während eine Drehachse des zweiten Kegelrads parallel ist zur Richtung, in der das Distanzelement zur Veränderung des Distanzelementabstandes verschiebbar ist.

In einer alternativen Ausgestaltung kann der Stellmechanismus eine Kreuzgelenkverbindung aufweisen, mit der die Kraft zur Veränderung des Distanzelementabstandes vom Stellaktor auf das Distanzelement übertragbar ist. Der Stellaktor weist hierzu vorzugsweise wieder einen Drehantrieb auf, der eine Drehung einer Welle bewirkt, die mit einem Teil des Kreuzgelenkes verbunden ist. Ein anderer Teil des Kreuzgelenkes kann hier mit einer Welle verbunden sein, die eine Spindel dreht, auf das das Distanzelement verschiebbar sein kann. Die Welle kann auch selbst eine Spindelwelle sein. Auch hier kann das Distanzelement als Spindelmutter ausgestaltet sein, die auf der Spindelwelle laufen kann. Die erste Welle kann koaxial oder parallel zur Drehachse des Drehantriebs liegen, während die zweite Welle parallel zu jener Richtung liegen kann, in der das Distanzelement verschiebbar ist.

In einer weiteren Ausgestaltung der Erfindung kann der Stellmechanismus ein durch den Stellaktor antreibbares Zahnrad aufweisen, sowie außerdem eine Zahnstange, in die das Zahnrad eingreift. Auch hier kann der Stellaktor wieder einen Drehantrieb aufweisen, mit dem das Zahnrad drehbar ist. Die Zahnstange kann mit dem Distanzelement verbunden sein, so dass die Kraft zur Veränderung des Distanzelementes durch die Zahnstange auf das Distanzelement übertragbar ist. In dieser Ausgestaltung ist es vorteilhaft, wenn die Richtung, in die das Distanzelement zur Veränderung des Distanzelementabstands verschiebbar ist, senkrecht zur Drehachse des Drehantriebs steht.

In einer weiteren alternativen Ausgestaltung der Erfindung kann der Stellmechanismus ein durch den Stellaktor antreibbares Schneckenrad aufweisen sowie eine Schneckenwelle, in die das Schneckenrad eingreift. Auch hier ist es vorteilhaft, wenn der Stellaktor einen Drehantrieb aufweist, der das Schneckenrad antreibt. Die Schneckenwelle kann mit dem Distanzelement so verbunden sein, dass die Kraft der Veränderung des Distanzelementabstandes durch die Schneckenwelle auf das Distanzelement übertragbar ist. In dieser Ausgestaltung der Erfindung ist es ebenfalls vorteilhaft, wenn die Richtung, in die sich das Distanzelement zur Änderung des Distanzelementabstandes bewegt, senkrecht steht auf der Drehachse des Drehantriebs. Die Schneckenwelle ist hierbei auch wieder gleichzeitig eine Spindelwelle, sowie das bspw. bei der Variante mit dem Kegelrad der Fall war. Die Kraft und Linearbewegung wird dann wieder durch eine Spindelmutter aus der Drehung erzeugt.

Erzeugt der Stellaktor eine lineare Kraft, wie zum Beispiel der oben beschriebene Stellaktor mit einem Drehantrieb, einer durch den Drehantrieb drehbare Spindelwelle und einer auf der Spindelwelle laufende Spindelmutter, so kann die Extremitätenunterstützungsvorrichtung auch eine Kette von zumindest zwei über Verbindungsgelenke miteinander verbundenen Gliedern aufweisen, von denen ein erstes der Glieder am linear beweglichen Teil des Stellaktors, beispielsweise an der Spindelmutter, angreift und ein letztes der Glieder an dem Distanzelement angreift. Besonders vorteilhaft ist es dabei, wenn die Glieder an den Verbindungsgelenken jeweils in zumindest einer Schiene geführt sind. Die Schiene kann dabei zum Beispiel als zwei parallele Langlöcher oder Nuten realisiert sein, zwischen denen das Glenenk angeordnet ist und in welche koaxial zur Gelenkachse angeordnete Stifte oder Achsen eingreifen. Vorteilhafterweise sind die Glieder dabei als längliche gerade Elemente ausgeführt und die Verbindungsgelenke Drehgelenke, deren Gelenkachsen senkrecht zur Längsrichtung der Glieder steht. Die beschriebenen Schienen können dann ebenfalls senkrecht zur Achse der Verbindungsgelenke verlaufen. Diese Ausgestaltung erlaubt es, durch die Spindelmutter des Stellaktors sowohl eine Zugkraft als auch eine Druckkraft auf das Distanzelement auszuüben. Es ist daher ausreichend, das Distanzelement auf einer Seite mit der Kette von Gliedern zu verbinden, die hier als Stellzugübertragungselement angesehen werden kann. Besonders vorteilhaft sind zwei der Glieder vorgesehen, von denen eines mit der Spindelmutter über ein Drehgelenk verbunden ist und das andere mit dem Distanzelement über ein Drehgelenk verbunden ist. Das Verbindungsgelenk zwischen den beiden Gliedern kann in einer Schiene mechanisch geführt sein, die auf das Führungselement hin verlaufen kann, durch das das Distanzelement geführt wird. Das Verbindungsgelenk verschiebt sich dann bei Verschiebung des Distanzelementes vom Drehgelenk weg in Richtung des Führungselementes.

In einer vorteilhaften Ausgestaltung kann der Stellaktor zumindest einen Hydraulikzylinder aufweisen, mit dem die Kraft zur Veränderung des Distanzelementabstandes erzeugbar ist. Vorteilhafterweise kann ein solcher Hydraulikzylinder am oder im Extremitätenhebel angeordnet sein. Bevorzugt kann er so ausgerichtet sein, dass eine Richtung, in der sich ein Hydraulikkolben des Hydraulikzylinders bewegt, parallel liegt zum Extremitätenhebel oder parallel liegt zum Führungselement.

Vorteilhafterweise kann die Extremitätenunterstützungsvorrichtung ein am Extremitätenhebel angeordnetes Verschiebeelement aufweisen. Es kann dabei das Zugübertragungselement mit einem seiner Enden mit dem Verschiebeelement fest verbunden sein. Vorteilhafterweise kann das Verschiebeelement in einer senkrecht zur Drehachse stehenden Ebene entlang einer Längsrichtung des Extremitätenhebels und/oder in Richtung senkrecht zu der Längsrichtung des Extremitätenhebels am Extremitätenhebel verschiebbar sein und an bestimmter Position fixierbar sein. Hierzu können am Extremitätenhebel z. B. Schienen oder andere Führungselement in den entsprechenden Richtungen vorgesehen sein. Hierdurch ist es möglich, einen Kraftbereich einzustellen, in dem die Unterstützungsvorrichtung wirken kann und auch Einfluss nehmen kann auf den Verlauf der winkelabhängigen Unterstützungskraft. Wird beispielsweise das Verschiebeelement näher an das Drehgelenk bewegt, wird die unterstützende Kraft kleiner und wird es weiter weg vom Drehgelenk bewegt, wird die unterstützende Kraft größer.

Vorteilhafterweise kann der Distanzelementabstand und damit der Grad der Unterstützung beispielsweise mittels eines Schalters und/oder eines Schiebereglers eingestellt werden. Bedient der Benutzer den Schalter oder Schieberegler, aktiviert er damit den Stellaktor oder deaktiviert ihn und löst ggf. vorhandene Blockierelemente und/oder Kupplungen und stellt dadurch den Unterstützungsgrad ein.

Es ist auch möglich, dass die Extremitätenunterstützungsvorrichtung z. B. einen Näherungssensor, einen Kraftsensor und/oder einen Drucksensor aufweist, die eingerichtet sind, ein Gewicht einer aufzunehmenden Last zu erfassen. Es kann dann der Stellmechanismus eingerichtet sein, den Distanzelementabstand basierend auf dem erfassten Gewicht einzustellen. Hierzu kann z. B. eine Steuervorrichtung vorgesehen sein, die das Gewicht durch den entsprechenden Sensor erfasst und den Stellaktor entsprechend aktiviert. Als Näherungssensor kann z. B. ein RFID-Transceiver vorgesehen sein, der das Gewicht z. B. aus einem RFID-Chip liest, der an der Last angeordnet sein kann.

Es ist auch möglich, dass die Extremitätenunterstützungsvorrichtung einen Muskelsignalsensor aufweist, mit dem Aktivitätssignale zumindest eines Muskels der Extremität messbar sind, die mit der Extremitätenunterstützungsvorrichtung unterstützt werden soll. Der Stellmechanismus kann dann eingerichtet sein, den Distanzelementabstand basierend auf dem gemessenen Aktivitätssignal einzustellen. Wird beispielsweise eine hohe Muskelaktivität gemessen, so kann ein hoher Unterstützungsgrad eingestellt werden.

In einer Ausgestaltung der Erfindung kann die Extremität ein Arm sein und die Extremitätenunterstützungsvorrichtung also eine Armunterstützungsvorrichtung oder eine Schulterunterstützungsvorrichtung.

Das Zugübertragungselement und/oder das Stellzugübertragungselement können zumindest ein Seil und/oder eine Kette und/oder zumindest einen Riemen aufweisen oder sein. Generell kommen alle Elemente in Frage, mit denen insbesondere Zugkräfte übertragbar sind.

In einer vorteilhaften Ausgestaltung der Erfindung kann der Extremitätenhebel auch ein Verstellelement aufweisen, mittels dessen der Abstand des Extremitätenangriffs vom Drehgelenk veränderbar ist. Ein solches Verstellelement kann beispielsweise eine arretierbare Teleskopverbindung sein, deren eine Hälfte mit dem Drehgelenk verbunden ist und deren andere Hälfte mit dem Extremitätenangriff verbunden ist. Die Hälften können dabei ineinander verschiebbar sein. Diese Teleskopverbindung kann auch ohne Arretierung eingesetzt werden, wodurch dem System ein zusätzlicher passiver prismatischer Bewegungsfreiheitsgrad gegeben werden kann, um bspw. Zwangskräften vorzubeugen.

Erfindungsgemäß wird außerdem ein Verfahren zum Heben, Halten und/oder Tragen einer Last und/oder zum Ausführen von Überkopftätigkeiten angegeben. Dabei trägt ein Benutzer eine Extremitätenunterstützungsvorrichtung nach einem der vorhergehenden Ansprüche. Mit Unterstützung durch die Extremitätenunterstützungsvorrichtung hebt der Benutzer diese Last an, hält sie und/oder trägt sie und/oder führt mit über Kopfhöhe oder Schulterhöhe erhobenen Händen eine Tätigkeit aus.

Vorteilhafterweise wird dabei der Distanzelementabstand vor und/oder während des Anhebens, Haltens oder Tragens und/oder Ausführens der Tätigkeit mit über Kopfhöhe erhobenen Händen auf einen ersten Wert eingestellt. Anschließend hebt der Benutzer die Last an, hält, trägt sie und/oder führt die Tätigkeit mit über Kopfhöhe erhobenen Händen aus. Der Benutzer stellt dann die Last ab und/oder beendet die Tätigkeit mit über Kopfhöhe erhobenen Händen und der Distanzelementabstand wird auf einen zweiten Wert, der kleiner ist als der erste Wert, eingestellt. In einer vorteilhaften Ausgestaltung kann der zweite Wert auch eine völlige Deaktivierung der Unterstützung sein. Hierzu kann der Distanzelementabstand auf einen minimalen Wert reduziert werden, der das durch das Zugübertragungselement ausgeübte Drehmoment auf null reduziert.

Vorteilhaft ist eine Ausführung des Verfahrens, in der während der Distanzelementwert auf den ersten Wert eingestellt wird, der Stellaktor aktiviert ist, beispielsweise mit einer Spannung beaufschlagt wird, und zum Einstellen auf den zweiten Wert deaktiviert wird, beispielsweise indem die Spannung abgestellt wird. Dadurch ist für das Einstellen des Distanzelementabstandes auf den zweiten Wert keinerlei Energie erforderlich. Das Rückstellen auf den zweiten Wert kann beispielsweise durch die elastischen Elemente bewirkt werden oder unterstützt werden.

Weist der Stellaktor wie oben beschrieben einen Drehantrieb, einen Linearisierungsmechanismus, mit dem ein vom Drehantrieb bewirktes Drehmoment in die Kraft zur Veränderung des Distanzelementabstandes übertragbar ist sowie eine Kupplung auf, mit der die Übertragung des Drehmomentes in die Kraft herstellbar und lösbar ist, so kann vorteilhafterweise vor dem Einstellen des Distanzelementabstandes auf den ersten Wert mit der Kupplung die Übertragung des Drehmoments in die Kraft zwischen dem Drehantrieb und dem Distanzelement hergestellt werden und zum Einstellen des Distanzelementes auf den zweiten Wert die Übertragung des Drehmomentes in die Kraft durch die Kupplung gelöst werden. Auch hier kann das zumindest eine elastische Element die Rückstellung auf den zweiten Wert unterstützen.

Weist der Stellmechanismus wie oben beschrieben ein Blockierelement auf, so kann mit diesem der Distanzelementabstand fixiert werden. Dabei wird vor dem Einstellen des Distanzelementabstandes auf den ersten Wert das Blockierelement geöffnet und nach dem Einstellen des Distanzelementabstandes auf den ersten Wert der Distanzelementabstand mit dem Blockierelement fixiert.

Zum Einstellen des Distanzelementabstandes auf den zweiten Wert wird das Blockierelement wieder gelöst. Auch hier kann das zumindest eine elastische Element das Einstellen auf den zweiten Wert unterstützen. Vorteilhafterweise kann der Stellaktor sowohl den Drehantrieb, den Linearisierungsmechanismus und die Kupplung wie vorstehend beschrieben aufweisen, als auch das Blockierelement. Vor dem Einstellen des Distanzelementabstandes auf den ersten Wert kann dann mit der Kupplung die Übertragung des Drehmoments in die Kraft zwischen dem Drehantrieb und dem Distanzelement hergestellt werden. Nach dem Einstellen des Distanzelementabstandes auf den ersten Wert kann dann der Distanzelementabstand mit dem Blockierelement fixiert werden. Zum Einstellen des Distanzelementabstandes auf den zweiten Wert kann das Blockierelement und die Kupplung gelöst werden. Das Einstellen auf den zweiten Wert kann wiederum durch das zumindest eine elastische Element unterstützt oder bewirkt werden.

Im Einzelnen sind folgende beispielhafte Verfahrensführungen möglich. Ist weder ein blockierendes Element noch eine Kupplung noch ein elastisches Element vorgesehen, kann die Einstellung auf den ersten Wert des Distanzelementabstandes dadurch erfolgen, dass der Stellaktor aktiviert wird. Dadurch, dass der Stellaktor aktiviert bleibt, kann der Distanzelementabstand auf dem ersten Wert gehalten werden. Zur Einstellung auf den zweiten Wert kann der Stellantrieb das Distanzelement aktiv auf den zweiten Wert bewegen. Ist der Stellaktor ein elektrischer Stellaktor, so kann also sowohl zum Einstellen des Distanzelementes auf den ersten Wert wie auch auf den zweiten Wert eine entsprechende Spannung an den Stellaktor angelegt werden.

Sind weder das Blockierelement noch die Kupplung vorgesehen, jedoch zumindest eines der elastischen Elemente, so kann der Distanzelementabstand aktiv auf den ersten Wert eingestellt werden, indem der Stellantrieb aktiviert wird, im Falle eines elektrischen Stellantriebs beispielsweise durch Anlegen einer Spannung. Zum Halten des Distanzelementabstandes auf dem ersten Wert kann der Motor aktiviert bleiben. Zur Einstellung des zweiten Wertes kann der Motor dann deaktiviert werden, z. B. indem die Spannung abgeschaltet wird. Das zumindest eine elastische Element bewirkt dann die Verschiebung des Distanzelementes auf den zweiten Distanzelementabstand.

Ist kein Blockierelement, jedoch die Kupplung und das zumindest eine elastische Element vorgesehen, so kann zum Einstellen des Distanzelementabstandes auf den ersten Wert die Kupplung aktiviert werden, also eine Kraftübertragung herstellen und der Motor aktiviert werden. Zum Halten des Distanzelementes auf dem ersten Distanzelementabstand kann der Motor aktiviert bleiben und die Kupplung aktiviert bleiben. Zum Einstellen des Distanzelementabstandes auf den zweiten Wert kann dann die Kupplung gelöst werden, so dass die Kraftübertragung zwischen Drehantrieb und Linearisierungsmechanismus aufgehoben wird. Der Motor kann deaktiviert werden. Durch Lösen der Kupplung kann sich das Distanzelement in den zweiten Distanzelementabstand bewegen, ohne den Drehantrieb des Stellaktors mitzubewegen.

Weist die Extremitätenunterstützungsvorrichtung keine elastischen Elemente auf, jedoch das Blockierelement, so kann zur Einstellung des ersten Werts des Distanzelementabstandes das Blockierelement deaktiviert werden und der Stellaktor aktiviert werden. Zum Halten des Distanzelementabstandes auf dem ersten Wert kann dann das Blockierelement aktiviert werden, während der Stellaktor deaktiviert werden kann. Zum Einstellen des Distanzelements auf den zweiten Wert kann das Blockierelement geöffnet werden bzw. deaktiviert werden. Der Stellaktor kann dann den Distanzelementabstand aktiv auf den zweiten Wert verändern. Weist die Extremitätenunterstützungsvorrichtung das zumindest eine elastische Element auf sowie außerdem das Blockierelement, so kann zum Einstellen des Distanzelementabstands auf den ersten Wert der Stellaktor aktiviert werden, zum Halten des Distanzelementabstandes auf dem ersten Wert das Blockierelement aktiviert werden und der Stellaktor deaktiviert werden und zum Rückstellen auf den zweiten Wert der Stellantrieb unterstützt durch das zumindest eine elastische Element bei geöffnetem blockierendem Element das Distanzelement auf den zweiten Distanzelementabstand verschieben.

Alle vorstehend beschriebenen Abläufe können auch umgekehrt werden, also erster Distanzelementabstand und zweiter Distanzelementabstand vertauscht sein. Außerdem kann zumindest jeweils einer der beiden Distanzelementabstände in einem vordefinierten Bereich stufenlos einstellbar sein.

Im Folgenden soll die Erfindung anhand einiger Figuren beispielhaft erläutert werden. Die in den Figuren beschriebenen Merkmale können dabei auch unabhängig vom konkreten Beispiel realisiert sein und zwischen den Beispielen kombiniert werden. Gleiche Bezugszeichen kennzeichnen gleiche oder entsprechende Merkmale.

Es zeigt:
- Fig. 1: einen beispielhaften Aufbau einer erfindungsgemäßen Extremitätenunterstützungsvorrichtung,
- Fig. 2: eine Ausgestaltung eines Stellmechanismus
- Fig. 3: eine schematische Darstellung des veränderten Verlaufs des Zugübertragungselements bei unterschiedlichen Winkeln des Extremitätenhebels,
- Fig. 4: beispielhafte Ausgestaltungen der Extremitätenunterstützungsvorrichtung,
- Fig. 5: beispielhafte Ausgestaltungen des Stellmechanismus,
- Fig. 6: weitere beispielhafte Ausgestaltungen des Stellmechanismus,
- Fig. 7: weitere beispielhafte Ausgestaltungen des Stellmechanismus,
- Fig. 8: weitere beispielhafte Ausgestaltungen des Stellmechanismus,
- Fig. 9: weitere Ausgestaltungen des erfindungsgemäßen Stellmechanismus,
- Fig. 10: zeigt hierzu beispielhaft und schematisch eine Ausgestaltung der erfindungsgemäßen Extremitätenunterstützungsvorrichtung für den Fall, dass die unterstütze Extremität Beine sind,
- Fig. 11: weitere beispielhafte Ausgestaltungen des Stellmechanismus,
- Fig. 12: weitere beispielhafte Ausgestaltungen des Stellmechanismus,
- Fig. 13: weitere beispielhafte Ausgestaltungen des Stellmechanismus,
- Fig. 14: weitere beispielhafte Ausgestaltungen des Stellmechanismus,
- Fig. 15: weitere beispielhafte Ausgestaltungen des Stellmechanismus, und
- Fig. 16: weitere beispielhafte Ausgestaltungen des Stellmechanismus.

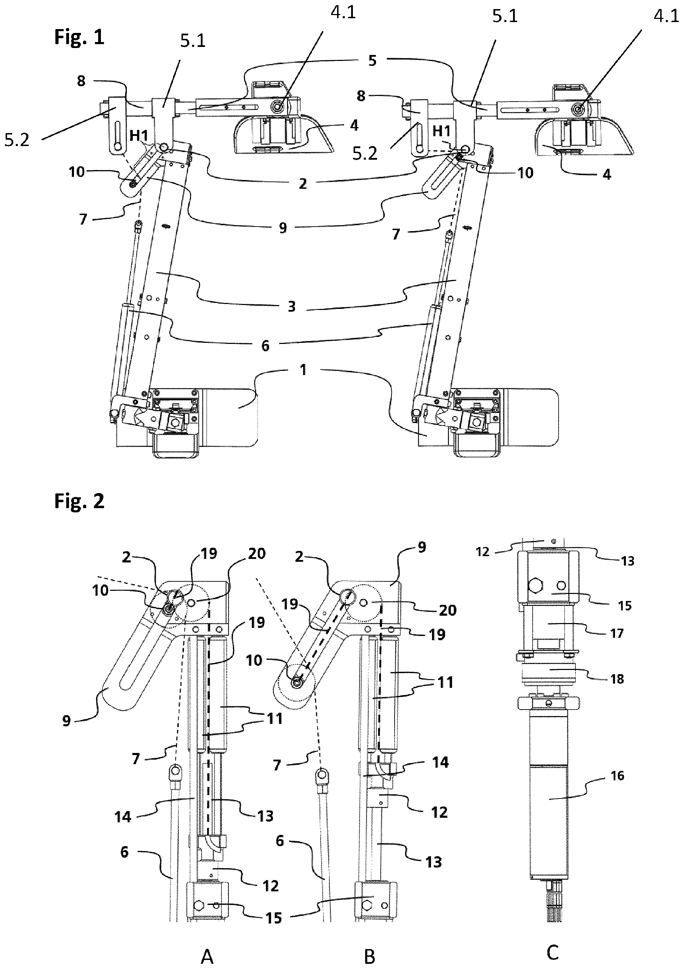

Figur 1 zeigt eine beispielhafte Ausgestaltung einer erfindungsgemäßen Extremitätenunterstützungsvorrichtung zur Unterstützung einer Extremität eines Benutzers, hier eines Arms des Benutzers. Die Vorrichtung weist einen Extremitätenangriff 4 auf, der eingerichtet ist, am Arm des Benutzers anzugreifen. Der Extremitätenangriff 4 ist über ein Angriffverbindungselement 4.1, hier zum Beispiel ein Drehgelenk oder eine Schraubverbindung in Kombination mit einem prismatischen Gelenk (Verschieblichkeit in Richtung des Extremitätenhebels 5), mit einem Extremitätenhebel 5 verbunden. Der Extremitätenangriff 4 ist hier als Manschette ausgestaltet, die den Arm des Benutzers umschließen kann. Sie weist hierzu eine untere Auflagerinne sowie eine obere Rinne auf, die zusammen eine zylinderförmige Fläche formen. Die Manschette kann öffenbar sein, so dass der Benutzer seinen Arm darin hineinlegen kann. Im einfachsten Fall kann das Angriffverbindungselement 4.1 auch einfach eine Befestigung sein, mit der der Armangriff 4 am Extremitätenhebel 5 befestigt ist. Sind Extremitätenhebel 5 und Extremitätenangriff 4 monolithisch hergestellt, so kann auch der Verbindungsbereich zwischen dem als Extremitätenangriff wirkendem Teil und dem als Extremitätenhebel wirkendem Teil als Angriffverbindungselement 4.1 angesehen werden.

Der Extremitätenhebel 5 ist hier länglich ausgestaltet und weist ein Zwischenelement 5.1 auf, mit dem er mit einem Drehgelenk 2 verbunden ist. Der Extremitätenhebel 5 ist um das Drehgelenk 2 drehbar. Die Extremitätenunterstützungsvorrichtung weist außerdem ein Zugübertragungselement 7, hier einen Seilzug 7, auf, das auf einer dem Angriffverbindungselement 4.1 bezüglich des Drehgelenks 2 gegenüberliegenden Seite des Extremitätenhebels 5 an dem Extremitätenhebel 5 angreift. Das Zugübertragungselement 7 greift hierbei an einem weiteren Zwischenelement 5.2 am Extremitätenhebel 5 an. Das Zwischenelement 5.2 soll als Teil des Extremitätenhebels 5 angesehen werden. Es weist im gezeigten Beispiel eine Schiene auf, in der der Angriffspunkt des Zugübertragungselementes 7 in Richtung senkrecht zur Längsachse des Extremitätenhebels 5 verschiebbar und fixierbar ist. Hierdurch kann die Zugwirkung des Zugübertragungselementes 7 auf den Extremitätenhebel 5 eingestellt werden. Die Extremitätenunterstützungsvorrichtung weist außerdem ein Distanzelement 10 auf, das einen Abstand des Zugübertragungselementes 7 vom Drehgelenk 2 am Berührungspunkt des Zugübertragungselements 7 mit dem Distanzelement 10 in zumindest einer Richtung, hier in Richtung vom Drehgelenk 2 weg begrenzt.

Das Distanzelement 10 ist mittels eines Stellmechanismus zur Veränderung eines Distanzelementabstandes H1 des Distanzelementes 10 vom Drehgelenk 2 bewegbar. Der Stellmechanismus ist hier zum Teil in einem Verbindungselement 3 verborgen und wird in den folgenden Figuren ausführlich erläutert. Im in Fig. 1 gezeigten Beispiel verbindet das Verbindungselement 3 das Drehgelenk 2 mit einem Torsomodul 1, das eingerichtet ist, am Torso, im gezeigten Beispiel am Becken des Benutzers, anzugreifen. Das Verbindungselement 3 ist im gezeigten Beispiel als länglicher Quader ausgestaltet, der mit dem Torsomodul 1 über Gelenke verbunden ist, so dass der Extremitätenangriff 4 um einen Verbindungspunkt des Verbindungselementes 3 mit dem Torsomodul 1 drehbar ist. Hierdurch kann der Nutzer seinen Arm in den entsprechenden Freiheitsgraden frei bewegen.

Das Zugübertragungselement 7 ist mit seinem Ende, mit dem es nicht am Extremitätenhebel 5 angreift, mit einem passiven Aktor 6 gekoppelt, der eingerichtet ist, eine Zugkraft auf das Zugübertragungselement 7 auszuüben. Mit dem Zugübertragungselement 7 wird hier die Zugkraft vom passiven Aktor 6 auf den Extremitätenhebel 5 übertragen. In diesem Beispiel existiert eine Verbindung 3 zwischen dem Torsomodul 1, das hier eine Beckenanbindung bzw. ein Beckenmodul 1 ist, und dem Drehgelenk 2. Das Drehgelenk 2 ist vorzugsweise nahe der Schulter positioniert, vorzugsweise so, dass seine Drehachse durch das Genohumeralgelenk verläuft. Eine Position davor und dahinter sowie darüber oder darunter ist aber auch möglich, je nach Konzept des Exoskeletts. Das Verbindungselement 3, das hier auch als Antriebssäule wirkt, verbindet das Beckenmodul 1 mit dem Drehgelenk 2. Durch den passiven Aktor 6, der hier beispielsweise ein Federelement, eine Gaszugfeder oder eine mechanische Feder sein kann, wird ein Drehmoment um das Drehgelenk 2 erzeugt, wodurch eine Kraft über den Extremitätenhebel 5 und den Armangriff 4 auf den Arm des Benutzers übertragen wird. Der Extremitätenhebel 5 ist dabei drehbar gelagert um das Drehgelenk 2. Der passive Aktor 6 ist vorzugsweise nahe dem Verbindungselements 3 angeordnet, um die Abmessungen der Extremitätenunterstützungsvorrichtung gering zu halten. Das untere Ende des passiven Aktors 6 kann variieren, sollte aber vorzugsweise distal des Drehgelenkes 2 angeordnet sein, so dass dieses bei Streckung noch nicht mit dem Führungselement 9 kollidiert. Im in Fig. 1 gezeigten Beispiel weist die Extremitätenunterstützungsvorrichtung ein Führungselement 9 auf, entlang dem das Distanzelement 10 zur Veränderung des Distanzelementabstandes H1 bewegbar ist. Dabei kann das Führungselement 9 gegenüber dem Stellmechanismus fixiert oder fixierbar sein und/oder es kann der Extremitätenhebel 5 gegenüber dem Führungselement 9 drehbar sein. Das Führungselement 9 weist im gezeigten Beispiel eine Schiene auf, in der das Distanzelement 10 beweglich ist. Im gezeigten Beispiel verläuft die Schiene gerade und radial zum Drehgelenk 2. Sie weist zwei gegenüberliegende Langlöcher auf, in die das Distanzelement mit Stiften oder Rollen eingreift, so dass es durch die Langlöcher gehalten wird.

Das Zugübertragungselement kann wie gesagt zum Beispiel ein Seilzug, Zugseil oder Seil sein, beispielsweise ein Drahtseil oder ein sonstiger Seilzug aus Kunststoffen oder natürlichen Materialien, Riemen, Ketten und Ähnliches. Das Zugübertragungselement 7 wird über das Distanzelement 10 geführt bis zu dem Angriffspunkt am Extremitätenhebel 5.

Die resultierende Kraft auf den Extremitätenhebel 5 wird erzeugt durch das Federelement 6 und bleibt je nach Feder ggf. ungefähr gleich groß. Der Distanzelementabstand H1 des angreifenden Kraftvektors in Seilrichtung zum Drehgelenk 2 kann variiert werden, wodurch sich das resultierende Drehmoment um das Drehgelenk 2 bzw. die resultierende Kraft auf den Armangriff 4 ändert. Für diesen Abstand verantwortlich ist die Position des Distanzelementes 10 in dem Führungselement 9. Ist der Abstand H1 des Distanzelementes 10 zum Drehgelenk 2 geringer, so wird die unterstützende Kraft in der Armanbindung 4 geringer. Dies ist in Fig. 1 rechts gezeigt. Ist der Abstand H1 größer wie in Fig. 1 links gezeigt, so ist auch die auf den Armangriff wirkende Kraft größer. Der Abstand H1 kann bis auf null verringert werden, so dass die resultierende Kraft gleich null wird und die Unterstützung vollständig deaktiviert wird. Sie kann unter Umständen sogar negativ werden, wodurch der Arm nicht nach oben gedrückt, sondern nach unten gezogen wird. Je weiter das Distanzelement 10 vom Drehgelenk 2 entfernt ist, desto größer wirkt der virtuelle Hebelarm H1 und somit die Kraft auf den Armangriff 4.

Fig. 2 zeigt einige der in Fig. 1 gezeigten Elemente, wobei jedoch der Extremitätenhebel 5 und der Armangriff 4 sowie das Torsomodul 1 und das Verbindungselement 3 zur Erhöhung der Übersichtlichkeit nicht gezeigt sind. Dabei zeigt Teilfigur 2A einen Zustand, in dem die Unterstützung vollständig deaktiviert ist, Teilfigur 2B einen Zustand bei maximaler Unterstützung und Teilfigur 2C einen Stellmechanismus, der in Fig. 1 im Inneren des Verbindungselementes 3 angeordnet ist.

Der in Fig. 2C gezeigte Stellmechanismus weist einen Stellaktor 16 auf, der zum einen einen Drehantrieb A1 enthält, durch den eine Spindelwelle 13 drehbar ist. Wie in den Figuren 2A und 2B zu erkennen ist, läuft auf der Spindelwelle 13 eine Spindelmutter 12 entlang einer Führungsstange 14. Die Führungsstange 14 verhindert die Drehung der Spindelmutter 12, so dass diese sich bei Drehung der Spindelwelle 13 entlang dieser bewegt. Ein Stellzugübertragungselement 19 ist einerseits mit der Spindelmutter 12 verbunden und andererseits mit dem Distanzelement 10. Übt der Drehantrieb A1 ein Drehmoment auf die Spindelwelle 13 aus, so bewegt sich die Spindelmutter 12 in Richtung der Drehachse der Spindelwelle 13 und zieht oder lockert dabei die Stellzugübertragungselement 19. Hierdurch verschiebt sich das Distanzelement 10 im Führungselement 9. In Fig. 2A ist die Spindelmutter 12 in ihrer untersten Position angeordnet, so dass das Distanzelement 10 in seiner dem Drehgelenk 2 nächsten Positionen angeordnet ist, wodurch im gezeigten Beispiel die Unterstützung vollständig deaktiviert wird. Der Unterstützungsgrad ist hier also null. Im in Fig. 2B gezeigten Zustand ist die Spindelmutter an ihrer obersten Position angeordnet, wodurch das Distanzelement 10 den größten Abstand H1 vom Drehgelenk 2 hat. Der Unterstützungsgrad ist hier also maximal.

Mit dem Führungselement 9, hier eine Verstellschiene, verbunden sind im Inneren des Verbindungselementes 3 ein oder mehrere elastische Elemente 11, hier Federelemente 11 (bevorzugt Gasdruckfedern, alternativ auch vorgespannte oder reguläre mechanische Federn). Die anderen Enden dieser Federelemente 11 sind verbunden (direkt oder über Zwischenbauteile) mit der Spindelmutter 12. Die Führung 14 verhindert eine Drehung der Spindelmutter 12 bei Drehung der Spindelwelle 13. Dadurch verfährt die Spindelmutter 12 beim Drehen der Spindelwelle 13 längs entlang der Spindelwelle 13. Bei der Spindelwelle 13 und der Spindelmutter 12 handelt es sich bevorzugt um eine Kugelgewindespindel, aber auch Trapezspindeln oder andere reibungsarme Spindeln sind möglich. Es ist auch möglich, dass der Stellmechanismus ein oder mehrere Trommeln aufweist, auf denen zumindest ein Zugkräfte übertragendes Element, beispielsweise ein Seilzug, auf- und abgewickelt wird.

Die Spindelwelle 13 ist ihrerseits gelagert in einem Lagerblock 15 und verbunden mit einer Antriebswelle des Drehantriebs A1, der beispielsweise ein Elektromotor sein kann. Zwischengeschaltet sein können weitere Elemente wie Bremsen 17, die auch als Blockierelemente 17 bezeichnet werden, und/oder Kupplungen 18. Die Reihenfolge der Blockierelemente 17 und Kupplungen 18 ist dabei beliebig. Wird der Antrieb A1 aktiviert, dreht sich die Spindelwelle 13 und die Spindelmutter 12 fährt nach oben, wodurch die Federelemente 11 komprimiert werden. Die Federelemente können auch umgekehrt so angeordnet sein, dass sie, ausgeprägt als Zugfedern, gedehnt werden. Die Spindelmutter 12 ist hier direkt oder indirekt verbunden mit einem Stellzugübertragungselement 19, das hier mittels Seilzügen 19 realisiert ist. Das Stellzugübertragungselement 19 verläuft über ein Umlenkelement 20, z. B. eine Seilrolle 20. Das Stellzugübertragungselement 19 ändert an dem Umlenkelemente 20 seinen Verlauf in Richtung des Distanzelementes 10 und verläuft hinter dem Umlenkungselement 20 nahezu parallel zur Verstellrichtung des Distanzelementes 9 bzw. zum Verlauf der Schiene des Führungselementes 9. Das Stellzugübertragungselement 19 ist mit dem Distanzelement 10 verbunden. Beim Hochfahren der Spindelmutter 12 verkürzt sich also der benötigte Seilzug 19 in der Antriebssäule, wodurch das Distanzelement 10 im Führungselement 9 nach distal gleiten kann, wodurch sich wiederum der Abstand zum Drehgelenk 2 vergrößert. Dieser Prozess kann unter einer Sekunde bis mehrere Sekunden lang dauern, abhängig von der Leistung des Drehantriebs des Stellaktors 16. Im Folgenden soll dieser Vorgang auch als "Aktivierung" bezeichnet werden. Ist eine schaltbare Kupplung 18 im Stellaktor vorhanden, ist diese während der Aktivierung geschlossen, so dass ein Drehmoment vom Drehantrieb auf die Spindelmutter 12 übertragen werden kann. Im aktivierten Zustand, also bei eingeschaltete Unterstützung, kann außerdem das Blockierelement 17, beispielsweise eine Permanentmagnetbremse, im Stellmechanismus aktiviert werden. Dies ermöglicht es, den Drehantrieb auszuschalten, sowie auch die Kupplung 18 zu öffnen, da das Blockierelement 17 gegen ein Zurückdrehen der Spindelwelle 13 sichert. In diesem Zustand ist das System nun vollständig passiv nutzbar, d. h. es wird keinerlei Strom verbraucht. Der Stellmechanismus weist den Stellaktor 16 auf. Optional kann der Stellmechanismus mit dem Stellaktor identisch sein. Er kann aber auch weitere Elemente enthalten, wie beispielsweise eine Führungsschiene, entlang derer die Spindelmutter verläuft und die deren Drehung verhindert.

Soll nun die Extremitätenunterstützungsvorrichtung deaktiviert werden, wird der Distanzelementabstand H1 zwischen Drehgelenk 2 und dem Distanzelement 10 auf nahezu null oder null reduziert. Ist die beschriebene Kupplung 18 vorgesehen, so kann die Deaktivierung ohne eine verzögernde Rückdrehung des Drehantriebs A1 erfolgen. Wird die Kupplung 18 geöffnet und ggf. das Blockierelement 17 geöffnet, können die vorgespannten elastischen Elemente 11 die Spindelmutter 12 passiv nach unten drücken ("Back Driving"), ohne Strom zu verbrauchen. Dieser Prozess kann sehr schnell von statten gehen, z. B. schneller als in einer Sekunde. Zusätzliche Dämpfungselemente können vorhanden sein, um die Spindelmutter 12 in den Spindelendlagen abzubremsen. Im deaktivierten Zustand braucht das System wiederum keinen Strom und wird passiv betrieben. Im in den Figuren 1 und 2 gezeigten Beispiel wird das Distanzelement 10 durch das Führungselement 9 geführt wird und das Führungselement 9 ist gegenüber dem Verbindungselement 3 fixiert. Das Führungselement 9 ist hierbei unabhängig von einer Bewegung des Extremitätenhebels 5. Dadurch zieht das über das Distanzelement 10 geführte Zugübertragungselement 7 dieses immer nach distal bzw. weg vom Drehgelenk 2.

Die Aktivierung der Extremitätenunterstützungsvorrichtung kann z. B. erfolgen durch äußere sensorische Impulse, beispielsweise kann ein Knopf gedrückt werden, eine äußere Last erfasst werden, beispielsweise durch Kraft- und/oder Drucksensoren, oder durch Muskelaktivitätsignale, die beispielsweise mit EMG gemessen werden. Es ist auch möglich, Werkzeuge und Lasten über Näherungssensoren, wie beispielsweise RFID-Transceiver, zu erkennen. Der Unterstützungsgrad, also der Distanzelementabstand, kann stufenlos eingestellt werden. Kraft-/Drucksensoren können zwischen Mensch und externer Last oder zwischen Mensch und Exoskelettanbindung, also zum Beispiel am Extremitätenangriff 4, angeordnet werden. Es ist auch möglich, den Unterstützungsgrad händisch mit einfachen Verstellreglern wie beispielsweise Potentiometern zu variieren. Der Unterstützungsgrad kann vor oder während jeder Tätigkeit live angepasst werden.

Typische Arbeitsszenarien, in denen die erfindungsgemäße Extremitätenunterstützungsvorrichtung zur Anwendung kommen kann, können zum Beispiel wie folgt aussehen:
**Szenario 1 -Tragen und Heben:** Ein Anwender trägt das System im deaktivierten Zustand und nimmt eine Last auf, nachdem er z.B. 100% Unterstützung eingestellt hat, weil er eine schwere Last tragen muss. Bei Aufnahme der Last drückt er einen Knopf, wodurch das System innerhalb von 2-3 Sekunden (beispielhafte Zeit, ggf. kürzer oder länger) vollständig aktiviert wird. Der Nutzer kann während dessen bereits zum Zielort laufen, wobei sich der Unterstützungsgrad über die 2-3 Sekunden erhöht und der Nutzer so bei Tragen entlastet wird. Das System ist nun (aktiviert) in einem passiven Zustand, in welchem keine Energie verbraucht wird. Der Nutzer kann am Zielort angekommen die Last mit voller Unterstützung auf eine erhöhte Position heben. Nach dem Abstellen der Last, lässt der Anwender den Knopf los, wodurch das System in weniger als 1 Sekunde (bspw. 0.5 Sekunden) wieder vollständig deaktiviert wird. Die kurze Zeit zur Deaktivierung ist sinnvoll, da so die Arme des Anwenders nicht unnötig lange hochgedrückt werden. Er kann sich quasi sofort wieder frei bewegen. Selbstverständlich muss der Anwender das System nicht deaktivieren. Er kann bspw. auch voll unterstützt eine Last von einer erhöhten Fläche herunterheben oder tragen. Allgemein kann der Anwender das System aktiviert lassen, wenn er bspw. Umstapelarbeiten durchführt. Oder er kann per Knopfdruck das System aktivieren, bevor er eine Last herunterhebt und nach dem herunterheben wieder deaktivieren. Über bspw. einen elektronischen Schieberegler kann der Nutzer außerdem den Unterstützungsgrad stufenlos wählen und so dem zu tragenden Gewicht anpassen.
**Szenario 2** - **Überkopfarbeiten:** Ein Anwender führt Überkopfarbeiten durch, bei denen er regelmäßig nach Werkzeugen oder Teilen greifen muss. Während der Arbeit über Kopf ist das System aktiviert. Wechselt der Anwender das Werkzeug registriert das System (bspw. über RFID) welches Werkzeug benutzt wird und passt den Unterstützungsgrad dem Gewicht an. Der Nutzer kann das System bspw. über Knopfdruck (Knopf am Finger) deaktivieren, wenn er die Arme herunternehmen möchte, wenn dieser bspw. den Ort wechselt oder eine Werkzeuge/Teil aufnehmen muss. Dies geht wie erwähnt quasi in Echtzeit.

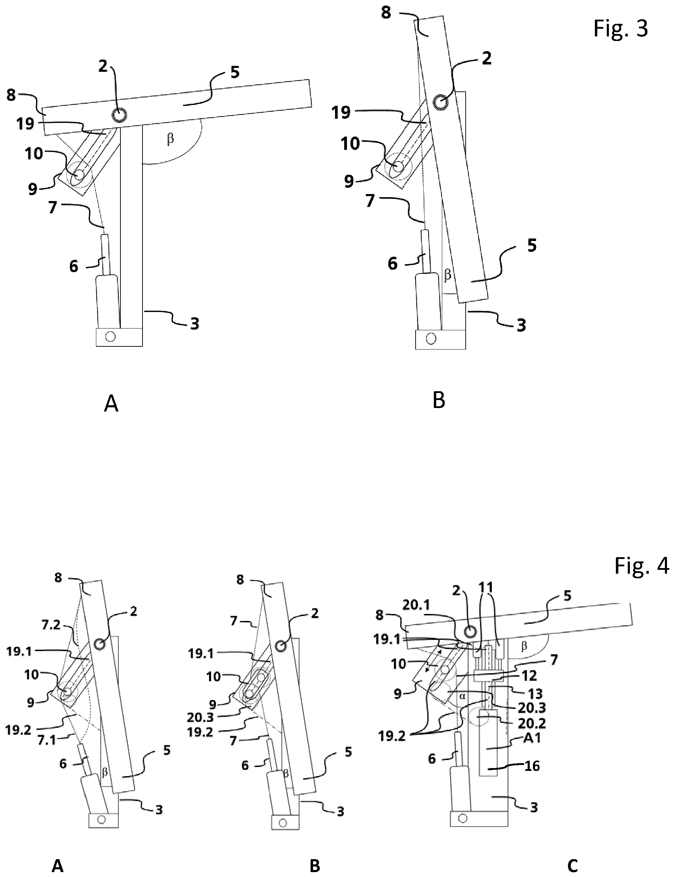

Fig. 3 zeigt schematisch einen Teil einer erfindungsgemäßen Extremitätenunterstützungsvorrichtung zur Erläuterung des Verlaufs des Zugübertragungselementes 7 bei unterschiedlichen Winkelstellungen des Extremitätenhebels 5. Fig. 3A zeigt den Extremitätenhebel 5 mit einem großen Winkel β zwischen dem Verbindungselement 3 und dem Extremitätenhebel 5. Wie in Fig. 2 verläuft das das Zugübertragungselement 7 vom passiven Aktor 6 zum Distanzelement 10 zu einem dem (nicht dargestellten) Extremitätenangriff 4 abgewandten Teil 8 des Extremitätenhebels 5. Das Zugübertragungselement 7 verläuft dabei zwischen dem Distanzelement 10 und dem Drehgelenk 2 hindurch und berührt das Distanzelement 10. Vom passiven Aktor 6 ausgehend gesehen ändert das Zugübertragungselement 7 seinen Verlauf am Distanzelement 10 in Richtung vom Drehgelenk 2 weg. Dadurch begrenzt das Distanzelement 10 den Abstand des Zugübertragungselementes 7 an jenem Ort, wo das Zugübertragungselement 7 das Distanzelement 10 berührt in Richtung vom Drehgelenk 2 weg. Das Zugübertragungselement 7 drückt also über große Winkelbereiche von β das Distanzelement 10 nach distal, also weg vom Drehgelenk 2 und ist durch die Position des Distanzelementes 10 in der Verstellschiene 9 nach distal begrenzt. Dadurch ergibt sich ein aufgezwungener Abstand und Hebelarm zum Drehgelenk 2. Wie in Figur 3B zu erkennen ist, gibt es allerdings auch einen Winkelbereich β, in dem das Zugübertragungselement 7 das Distanzelement 10 nicht berührt und die resultierende Kraft nicht nach distal zeigt, sondern nach proximal. Dies ist der Bereich, in dem β hinreichend klein ist. Hier hat das Distanzelement 10 keinen Einfluss auf den Hebelarm H1 des Extremitätenhebels 5 und somit auf das Unterstützungsmoment.

Der in Fig. 3B gezeigte Zustand ist nicht zwingend problematisch. Möchte man jedoch, dass das Distanzelement 10 auch bei kleinen Winkeln β einen Einfluss hat, so sind verschiedene Lösungen denkbar. Einige vorteilhafte Lösungen sind in Fig. 4 gezeigt. Fig. 4A zeigt eine Lösung, in der das Zugübertragungselement 7 ein erstes Zugübertragungsteilelement 7.1 und ein zweites Zugübertragungselement 7.2 aufweist. Die Zugübertragungsteilelemente 7.1 und 7.2 können auch Abschnitte des gemeinsamen Zugübertragungselementes 7 sein, wenn dies beispielsweise als Schleife ausgestaltet ist. Das eine Zugübertragungsteilelement 7.1 verläuft dabei vom passiven Aktor 6 aus am Distanzelement 10 auf dessen dem Drehgelenk 2 abgewandten Seite vorbei zu jenem dem Extremitätenangriff 4 abgewandten Ende 8 des Hebels 5. Das andere Zugübertragungsteilelement 7.2 verläuft vom passiven Aktor 6 zwischen dem Distanzelement 10 und dem Drehgelenk 2 hindurch zum Ende 8 des Extremitätenhebels 5. Das Zugübertragungsteilelement 7.2 wirkt hier wie in Fig. 3 gezeigt bei großen Winkeln β. In Fig. 4A ist der Extremitätenhebel 5 in einer Position kleiner Winkel β, wo wie in Fig. 3B gezeigt, das Zugübertragungselement 7.2 nicht durch das Distanzelement 10 begrenzt wird. In diesem Zustand läuft jetzt aber in Fig. 4A das äußere Zugübertragungselement 7.1 am Distanzelement 10 vorbei, berührt dieses und ändert am Distanzelement 10 die Richtung seines Verlaufs in Richtung auf das Drehgelenk 2 zu. Das Zugübertragungsteilelement 7.1 greift dadurch in einem größeren Winkel am Ende 8 des Extremitätenhebels 5 an als im in Fig. 3B gezeigten Fall. Es kann dadurch auch bei kleinen Winkeln β eine hinreichende Unterstützung des Benutzers gewährleistet werden. Im gezeigten Beispiel sind die Zugübertragungsteilelemente 7.1 und 7.2 Seilzüge. Zusätzlich zu Seilzug 7.2 gibt es den zweiten Seilzug 7.1 der das Distanz-Element 10 von der anderen Seite greift, wodurch auch Kräfte nach proximal zum Drehgelenk 2 aufgenommen werden können. 7.2 ist hier übertrieben schlaff dargestellt um zu verdeutlichen welcher Seilzug die Kräfte überträgt. Erhöht sich der Winkel β, würde ab einem gewissen Winkel 7.1 schlaff werden und 7.2 würde sich spannen und die Kräfte übertragen. Auch könnte 7.1 und 7.2 ein einziges Zugelement sein, welches als Schlaufe ausgeführt ist, die durch eine Befestigung in 6 und 8 geführt ist. In diesem Fall wäre die Darstellung von 7.2 auch in dieser Position gespannt.

Das Zugübertragungsteilelement 7.1 übt hier eine Kraft in proximale Richtung auf das Distanzelement 10 aus. Sind die Zugübertragungsteilelemente 7.1 und 7.2 Abschnitte eines einzigen Zugübertragungselementes 7, das als Schlaufe ausgeführt ist, könnte auch das Zugübertragungsteilelement 7.2 in der in Fig. 4A gezeigten Position gespannt sein. Als Schlaufe könnte das Zugübertragungselement 7 z.B. durch eine Befestigung am passiven Aktor 6 und am abgewandten Ende 8 des Extremitätenhebels 5 geführt sein.

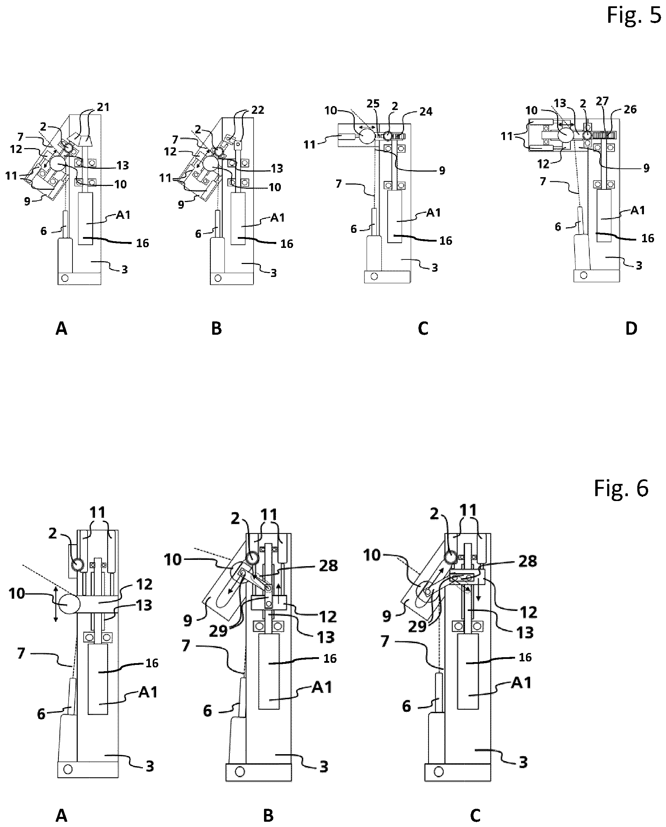

Fig. 4B zeigt eine weitere Möglichkeit, einen gewissen Mindestangriffswinkel des Zugübertragungselement 7 am Extremitätenhebel 5 bei kleinen Winkeln β zwischen dem Extremitätenhebel 5 und dem Verbindungselement 3 zu gewährleisten. Es weist hier das Distanzelement 10 zwei Rollen auf, die in Richtung des Führungselementes 9 nebeneinander angeordnet sind. Im gezeigten Beispiel haben die Rollen parallele Drehachsen. Das Zugübertragungselement 7 verläuft vom passiven Aktor aus zwischen den beiden Rollen hindurch zum abgewandten Ende 8 des Extremitätenhebels 5. Das Distanzelement 10 kann in dieser Ausgestaltung den Verlauf des Zugübertragungselementes 7 in beide Richtungen begrenzen, sowohl von Drehgelenk 2 weg als auch auf das Drehgelenk 2 hin. Dabei wird bei kleinen Winkeln die Kraft auf das Zugübertragungselement 7 von der näher am Drehgelenk 2 befindlichen Rolle ausgeübt und bei großen Winkeln von der weiter vom Drehgelenk 2 entfernten Rolle des Distanzelementes 10. Die in Fig. 4B gezeigte Ausgestaltung des Distanzelementes 10 mit zwei Rollen kann auch in den Figuren 5, 6 und 7 zur Anwendung kommen.

Soll das Distanzelement 10, wie in den Figuren 4A und 4B gezeigt, den Abstand der Zugübertragungselemente 7 vom Drehgelenk 2 auch bei kleinen Winkeln β begrenzen, so ist es vorteilhaft, wenn der Stellmechanismus es ermöglicht, eine Kraft zur Veränderung des Distanzelementabstandes H1 in beide Richtungen auf das Distanzelement 10 auszuüben, d. h. in Richtung des Drehgelenkes 2 und in Richtung von Drehgelenk 2 weg. Hierfür gibt es zahlreiche Möglichkeiten, von denen eine einfache in Fig. 4C gezeigt ist und weitere in Fig. 5 und 6. Das Distanzelement 10 kann Kräfte des einzelnen Seilzugs 7 nach distal und proximal aufnehmen, hier beispielhaft dargestellt, durch die zwei gekoppelten Seilrollen (andere zweiseitig wirkende Führungen/Umlenkbauteile sind ebenfalls möglich).

Im in Fig. 4C gezeigten Beispiel weist das Stellzugübertragungselement 19 zwei Stellzugübertragungsteilelemente 19.1 und 19.2 auf, die auch als erstes Stellzugübertragungselement 19.1 und weiteres Stellzugelement 19.2 bezeichnet werden können. Das erste Stellzugübertragungselement 19.1 ist einerseits mit dem Stellaktor, hier mit der Spindelmutter 12, derart verbunden, dass durch den Stellaktor 16 eine Zugkraft auf das erste Stellzugübertragungselement 19.1 ausübbar ist. Andererseits ist das erste Stellzugübertragungselement 19.1 mit dem Distanzelement 10 derart verbunden, dass mit dem ersten Stellzugübertragungselement 19.1 eine Kraft auf das Distanzelement 10 in Richtung auf das Drehelement 2 zu ausübbar ist. Dabei passiert das erste Stellzugübertragungselement 19.1 in seinem Verlauf von der Spindelmutter 12 zum Distanzelement 10 ein Umlenkelement 20.1. Ist das erste Stellzugübertragungselement beispielsweise ein Seil, eine Kette oder ein Riemen, so kann das Umlenkelement 20.1 vorteilhaft eine Rolle sein. Das Stellzugübertragungselement 19.1 ändert an dem Umlenkelement 20.1 die Richtung seines Verlaufs in Richtung auf das Distanzelement hin.

Das weitere Stellzugübertragungselement 19.2 ist mit dem Distanzelement 10 auf einer dem ersten Stellzugübertragungselement 19.1 gegenüberliegenden Seite des Distanzelementes 10 verbunden, hier also auf der dem Drehgelenk 2 abgewandten Seite des Distanzelementes 10. Das andere Ende des weiteren Stellzugübertragungselementes 19.2 ist mit dem Stellaktor 16 derart verbunden, dass durch den Stellaktor eine Zugkraft auf das weitere Stellzugübertragungselement 19.2 ausübbar ist, die der auf das erste Stellzugübertragungselement 19.1 ausgeübten Zugkraft entgegen gerichtet ist. Im in Fig. 4C gezeigten Beispiel ist das weitere Stellzugübertragungselement daher auf der gegenüberliegenden Seite der Spindelmutter 12 angeordnet. In seinem Verlauf vom Distanzelement zur Spindelmutter 12 verläuft das weitere Stellzugübertragungselement 19.2 über zwei Umlenkelemente 20.3 und 20.2. Ausgehend vom Distanzelement 10 verläuft das weitere Stellzugübertragungselement 19.2 zunächst zum Umlenkelement 20.3, ändert dort die Richtung seines Verlaufs in Richtung des Umlenkelementes 20.2, verläuft dann zum Umlenkelement 20.2 und ändert an diesem die Richtung seines Verlaufs auf die Spindelmutter 12 zu. Bewegt sich nun die Spindelmutter 12 nach oben, so zieht das weitere Stellzugübertragungselement 19.2 das Distanzelement 10 vom Drehgelenk 2 weg. Bewegt die Spindelmutter 12 sich nach unten, so zieht das Stellzugübertragungselement 19.1 das Distanzelement 10 in Richtung des Drehgelenkes 2. Auch die Umlenkelemente 20.2 und 20.3 können Rollen sein. Für alle Umlenkelemente 20.1, 20.2, 20.3 können jedoch auch beliebige abgerundete Oberflächen verwendet werden.

Die zusätzlichen Umlenkelemente 20.2 und 20.3 und die Zugelemente 19.1 und 19.2 positionieren das Distanz-Element 10 in der Verstell-Schiene 9, sodass dieses nach proximal und distal wirkende Kräfte aufnehmen kann. Seilzüge sind gestrichelt dargestellt, verdeckte Konturen der Umlenkrollen (hier repräsentativ für Umlenkelement 20.1, 20.2 und 20.3 und Distanzelement 10) gepunktet.

Fig. 5 zeigt weitere beispielhafte Ausgestaltungen eines Stellmechanismus mit Kraftübertragung vom Stellaktor 16 auf das Distanzelement 10. Der Extremitätenhebel 5 mit seinen Komponenten ist zur Erhöhung der Übersichtlichkeit in diesen Figuren ausgeblendet.

Den in Figuren 5A, 5B, 5C, 5D gezeigten Ausgestaltungen ist gemein, dass der Stellaktor 16 als Drehantrieb A1 ausgestaltet ist. In den Figuren 5A, 5B und 5D weist das Distanzelement 10 eine Spindelmutter 12 auf, die auf einer Spindelwelle 13 geführt ist. Elastische Elemente 11 werden bei Bewegung der Spindelmutter gespannt bzw. komprimiert und können die Zurückbewegung der Spindelmutter bewirken oder unterstützen. Die Ausgestaltungen der Figuren 5A, 5B und 5D unterscheiden sich nur darin, wie das Drehmoment vom Drehantrieb A1 auf die Spindelwelle 13 übertragen wird. In Fig. 5A erfolgt dies über eine Kegelradverbindung 21 mit zwei ineinander greifenden Kegelrädern, deren Drehachsen in dem Winkel zueinander stehen, in dem das Führungselement 9 zur Drehachse des Drehantriebs A1 steht. In Fig. 5B erfolgt die Übertragung über eine Kreuzgelenkverbindung 22 und in Fig. 5D über eine Schneckenrad 26-Schneckenwellen 27-Verbindung. Im in Fig. 5D gezeigten Beispiel ist es vorteilhaft, wenn der Winkel zwischen dem Führungselement 9 und der Drehachse des Drehantriebs 16 90° beträgt.

In Fig. 5C wird die Drehbewegung des Stellaktors 16 mittels eines Zahnrads 24 auf eine Zahnstange 25 übertragen, die mit dem Distanzelement 10 verbunden ist und dieses bewegt, wenn das Zahnrad 24 die Zahnstange 25 verschiebt.

Auch hier können elastische Elemente 11 vorgesehen sein. Auch hier steht vorzugsweise das Führungselement 9 im rechten Winkel zur Drehachse des Stellaktors 16.

Fig. 6A zeigt eine weitere Möglichkeit zur Veränderung des Distanzelementabstandes H1. Diese Möglichkeit zeichnet sich durch eine sehr schmale Bauform mit wenigen Bauteilen aus. Das Distanzelement 10 ist hierbei, vorzugsweise direkt oder über ein Drehgelenk, direkt mit dem Stellaktor 16 verbunden, im gezeigten Beispiel mit dessen Spindelmutter 12 als beweglichem Teil. Durch Drehen des Drehantriebs A1 des Stellaktors 16 bewegt sich die Spindelmutter 12 nach oben bzw. nach unten, wodurch sich auch das Distanzelement 10 nach oben bzw. nach unten bewegt. Hierdurch ändert sich der Distanzelementabstand H1 des Distanzelementes 10 vom Drehgelenk 2. In Fig. 6A ist es aber auch denkbar, dass das Distanzelement 10 über eine zweite bzw. über Stirnräder verknüpfte Welle bewegt wird, was ähnlich den Ausgestaltungen in Figur 5 wäre.

Die Figuren 6B und 6C zeigen eine weitere Möglichkeit der Kraftübertragung vom Stellaktor 16 auf das Distanzelement 10. In dem in den Figuren 6B und 6C gezeigten Beispiel ist das Distanzelement 10 mit dem Stellaktor 16, hier dessen Spindelmutter 12, über eine Kette von geraden, starren Verbindungsgliedern 29 verbunden, die mit der Spindelmutter 12 und dem Distanzelement 10 jeweils über ein Drehgelenk verbunden sind. Darüber hinaus sind die Verbindungsglieder 29 ihrerseits miteinander über ein Drehgelenk verbunden. Das Drehgelenk zwischen den Verbindungsgliedern 29 ist in einer Schiene 28 geführt, so dass sich das Drehgelenk nur entlang der Schiene 28 bewegen kann. Die Schiene 28 ist gegenüber der Drehachse des Stellaktors 16 in Richtung des Führungselementes 9 geneigt. Bewegt sich die Spindelmutter 12 nach oben, so schiebt sie das Gelenk in der Schiene 28 in Richtung des Führungselementes 9 und das am Distanzelement 10 angeordnete Verbindungsglied 29 schiebt dadurch das Distanzelement 10 in Richtung von Drehgelenk 2 weg. Bewegt sich die Spindelmutter 12 nach unten, so bewegen sich die genannten Elemente in die entgegengesetzte Richtung. Fig. 6B zeigt den Zustand des Systems mit einem nah am Drehgelenk angeordneten Distanzelement 10, also einem geringen Unterstützungsgrad, während Fig. 6C einen Zustand mit einem weit vom Drehgelenk 2 entfernten Distanzelement 10, also einen großen Unterstützungsgrad zeigt.

Die in Fig. 6B und 6C verwendeten Verbindungsglieder 29 sind steife, d. h. nicht flexible Bauteile, die z.B. über Drehgelenke oder auch Kugel- oder Kreuzgelenken miteinander verbunden sein können. Anstelle von Führungsschienen 28 kann das Gelenk auch in einer Führungsnut oder Führungsnuten 28 geführt sein.

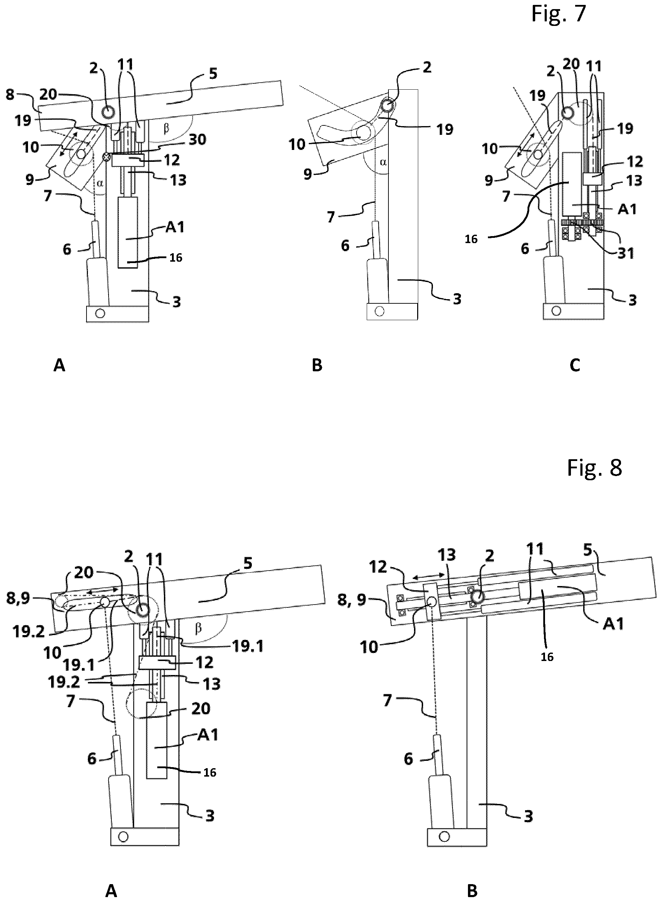

Die Figuren 7A und 7B zeigen wiederum einen Ausschnitt einer erfindungsgemäßen Extremitätenunterstützungsvorrichtung. Ein Winkel α zwischen dem Führungselement 9 und dem Verbindungselement 3 bzw. einer Drehachse des Stellaktors 16 kann unterschiedlich groß sein. Unterschiedliche Winkel α verändern den Verlauf des Distanzelementabstandes H1 und somit auch den Verlauf und die Größe des winkelabhängigen Unterstützungsmoments (das vom Winkel β zwischen Extremitätenhebel 5 und Verbindungselement 3 abhängt). Für unterschiedliche Tätigkeiten, z. B. Heben, Tragen, über Kopf halten, Schieben, Ziehen, können unterschiedliche Verläufe des Unterstützungsmoments gewünscht sein. Es kann daher vorteilhaft möglich sein, den Winkel α zwischen dem Führungselement 9 bzw. der Richtung, mit der dieses das Distanzelement 10 führt, und dem Verbindungselement 3 oder der Drehachse eines Drehantriebs A1 des Stellaktors 16 einzustellen, beispielsweise über die in Fig. 7A gezeigte gelenkige Lagerung 30 des Führungselementes 9 mit der Möglichkeit zur kraft- oder formschlüssigen Feststellung oder Arretierung in einem definierten Winkel α. In Fig. 7A ist diese Feststellmöglichkeit und die zugehörigen Winkel α für die in Fig. 1 und Fig. 2 gezeigte Ausgestaltung der Erfindung dargestellt, sie kann aber auch in den anderen Ausgestaltungen der Erfindung zum Einsatz kommen.

Wie in Fig. 7B gezeigt, ist es nicht zwingend erforderlich, dass das Führungselement 9 das Distanzelement 10 entlang eines geraden Weges führt. In Fig. 7B weist das Führungselement 9 eine gekrümmte Führung auf, die hier streng monoton gekrümmt ist. Hierdurch kann eine noch größere Varianz in den winkelabhängigen Unterstützungsmomentenverlauf gebracht werden. So ist mit einer Verstellung des Stellaktors 16 eine noch größere Änderung des Unterstützungsgrades bzw. der Momentecharakteristik möglich. Die Schiene des Führungselementes 9 kann z. B. so gekrümmt sein, dass sie im unteren Bereich der Unterstützung eher einen Verlauf des Unterstützungsmomentes (abhängig von β) annimmt, der einem geringen Winkel von α entspricht (beispielsweise 30°) und im oberen Bereich der Unterstützung eher einen Unterstützungsmomentenverlauf (abhängig von β) einnimmt, der einem größeren Winkel von α entspricht (beispielsweise 60°).

Fig. 7C zeigt beispielhaft einen Teil einer erfindungsgemäßen Extremitätenunterstützungsvorrichtung, in der der Stellaktor 16 einen Drehantrieb A1 aufweist, dessen Drehung über zwei ineinandergreifende Zahnräder 31 mit parallelen Achsen auf die Spindelwelle 13 übertragen wird. Dabei ist der Drehantrieb A1 neben der Spindelwelle 13, also in Richtung des Verbindungselementes 3 auf gleicher Höhe, angeordnet. Hierdurch kann die Länge des Stellaktors 16 in Längsrichtung des Verbindungselementes 3 verkleinert werden.

In weiteren alternativen Bauformen können Teile des Stellaktors 16 und des Stellmechanismus (also alle weiteren Elemente zwischen dem Distanzelement 10 und dem Stellaktor 16) auch an anderer Stelle angeordnet sein. Beispielsweise kann, wie in Fig. 8A gezeigt, das Führungselement 9 auch in jenem dem Extremitätenangriff 4 abzüglich des Drehgelenkes 2 abgewandten Ende 8 des Extremitätenhebels 5 angeordnet sein und zum Beispiel parallel zur Längsrichtung des Extremitätenhebels 5 verlaufen. In Fig. 8A wird das Distanzelement 10 daher entlang der Längsrichtung des Extremitätenhebels 5 im Bereich 8 geführt. Da das Distanzelement 10 hier in beide Richtungen durch Zugkräfte bewegt werden soll, weist das Zugkraftübertragungselement 19 hier wieder ein erstes Zugkraftübertragungselement 19.1 und ein weiteres Zugkraftübertragungselement 19.2 auf, die an gegenüber liegenden Seiten der Spindelmutter 12 fixiert sind und auf gegenüber liegenden Seiten am Distanzelement 10 angreifen. Sie werden über Umlenkelemente 20, beispielsweise Rollen 20, so geführt, dass sie im Bereich der Schiene des Führungselementes 9 zu deren Längsrichtung parallel verlaufen. Das Zugübertragungselement 7 ist in diesem Beispiel mit dem Distanzelement 10 direkt verbunden oder an diesem befestigt. Die Umlenkrollen 20 sind im Einzelnen so angeordnet, dass eine Umlenkrolle im gezeigten Beispiel koaxial ist zum Drehgelenk 20. Eine unterhalb der Spindelmutter 12 angeordnete Umlenkrolle lenkt das unten an der Spindelmutter angeordnete Stellzugübertragungselement 19.2 in Richtung dieser zum Drehgelenk koaxialen Rolle um. Die zum Drehgelenk 2 koaxiale Rolle lenkt dann das Stellzugübertragungselement 19.2 in Richtung eines weiteren Umlenkelementes, das auf jenem dem Drehgelenk 2 abgewandten Ende der Führungsschiene 9 angeordnet ist. Dieses Umlenkelement lenkt das Stellzugübertragungselement 19.2 dann in Richtung parallel zur Längsachse des Führungselementes 9 zum Distanzelement 10. Das oben an der Spindelmutter 12 angreifende Stellzugübertragungselement 19.1 verläuft von dort zu einem weiteren Umlenkelement 20 mit zum Drehgelenk 2 koaxialer Drehachse und wird von diesem in Richtung parallel zur Längsachse der Führungsschiene 9 zum Distanzelement 10 geführt.

In Fig. 8A wird beim Hochfahren der Spindelmutter 12 in der Verstellschiene 9 der Seilzug 19.1 freigegeben, so dass das Distanzelement 10 nach distal wandert. Gleichzeitig verkürzt sich das Stellzugübertragungselement 19.2 und zieht das Distanzelement 10 ebenfalls nach distal. Durch geeignete Anordnung des Umlenkelementes 20 kann dies unabhängig vom Winkel β gewährleistet werden. Vorteilhaft kann hier das Stellzugübertragungselement 19 auch leicht elastisch gestaltet werden, um kleinere Unterschiede zwischen freigegebenen und verkürzten Stellzugübertragungselementen 19 auszugleichen, die z. B. bei Winkeländerung β durch Aufrollen bzw. Abrollen auf den Umlenkelementen auftreten können. Zum Beispiel können die Stellzugübertragungselemente 19.1 und 19.2 hier als leicht elastische Seile ausgestaltet sein. Die in Fig. 8A gezeigte Ausgestaltung kann anstelle mit der Verwendung von Stellzugübertragungselementen 19.1 und 19.2 auch mit den in Figuren 5 und 6 gezeigten Übertragungsmöglichkeiten realisiert werden, also zum Beispiel mit mechanisch geführten Bauelementen wie in Fig. 6B und 6C oder mit Kardangelenken wie in Fig. 5C.

Fig. 8B zeigt wie Fig. 8A eine Ausgestaltung, in der das Führungselement 9 Teil des dem Extremitätenangriff 4 abgewandten Ende 8 des Extremitätenhebels 5 ist. Allerdings ist hier der Stellaktor 16 im Extremitätenhebel 5 angeordnet, wobei dessen Drehachse parallel zur Längsrichtung des Extremitätenhebels 5 liegt. Die Spindelmutter 12 bewegt sich also in Richtung der Längsrichtung des Extremitätenhebels 5 auf der Spindelwelle 13 und spannt oder komprimiert dabei die elastischen Elemente 11, die ebenfalls parallel zur Längsrichtung des Extremitätenhebels 5 liegen. In dieser Ausgestaltung kann das Zugübertragungselement 7 direkt am beweglichen Teil des Stellaktors 16, hier an der Spindelmutter 12, angeordnet und befestigt sein. Diese Ausgestaltung ist vorteilhaft, da hier Winkelabhängigkeiten vom Winkel β vermieden werden. Ein Drehantrieb A1 des Stellaktors 16 wie auch die beiden elastischen Elemente 11 sind hierbei auf der den Armangriff 4 aufweisenden Seite des Extremitätenhebels 5, also bezüglich des Drehgelenks 2 gegenüber dem Führungselement 9 angeordnet. Die Spindelmutter 12 verläuft entlang des Führungselementes 9.

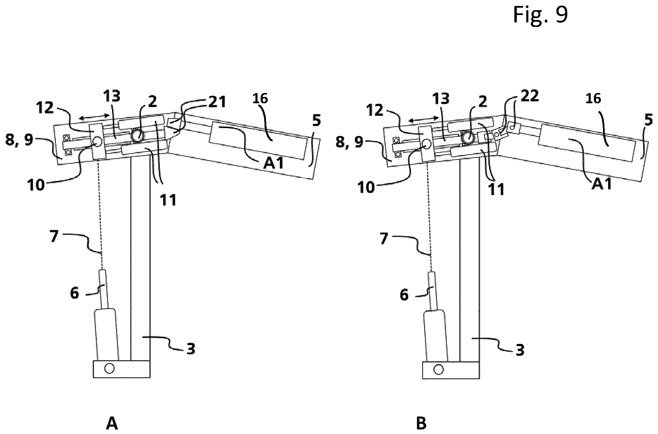

Im in Fig. 8B gezeigten Beispiel können auch die Federelemente 11 im Extremitätenhebel 5 angeordnet sein, um eine schnelle Deaktivierung zu ermöglichen. Steht der Drehantrieb A1 abgewinkelt zum Extremitätenhebel 5, können auch wieder die zuvor beschriebenen Elemente zur Umlenkung der Kraft verwendet werden, also beispielsweise Kardangelenke, Kegelräder und dergleichen, wie in den Figuren 5, 6 und auch 9 gezeigt. Auch Seilzüge können verwendet werden, beispielsweise mittels mehrerer Seilrollen 20, die die Position des Distanzelementes 10 in dem Führungselement 9 festlegen können. Die Figuren 9A und 9B zeigen beispielhaft eine solche Anwinkelung des Stellaktors 16 gegenüber dem Führungselement 9 und die Übertragung des Drehmoments vom Drehantrieb A1 des Stellaktors 16 über ineinandergreifende Kegelräder 21 in Fig. 9A bzw. über Kreuzgelenke 22 in Fig. 9B. Die elastischen Elemente 11 können hier vorteilhafterweise in jenem Teil des Extremitätenhebels 5 angeordnet sein, der auch das Führungselement 9 aufweist und zu diesem parallel liegen.

Für alle Varianten der Erfindung gilt, dass auch Varianten des Aufbaus ohne Bremse bzw. Blockierlement 17 oder Kupplung 18 betrieben werden können. In günstigeren oder kleineren Ausführung kann bspw. auf die Bremse bzw. das Blockierelement 17 verzichtet werden, wenn bspw. die Tätigkeit so hochdynamisch ist, dass sich das Feststellen energetisch nicht lohnt oder wenn kein Platz für die Bremse 17 ist. Dann ist vorzugsweise der Antrieb A1 ständig aktiviert. Auch auf die Kupplung 18 kann verzichtet werden, dann dreht beim Herunterfahren der Spindelmutter 12 der Antrieb A1 mit. Dadurch ist der Deaktivierungs-Prozess nicht ganz so schnell. Auch auf die Federelemente 11 im Inneren kann verzichtet werden. Dann muss jedoch der Antrieb A1 beim Deaktivieren mehr Drehmoment/Energie aufbringen um die Spindelmutter 12 entgegen der von außen anliegenden Kraft (durch Spannung des äußeren Unterstützungsmomenterzeugenden Federelements) in die Deaktivierungsposition zu bringen.

Allgemein können alle dargestellten Druckfedern grundsätzlich auch als Zugfedern ausgeprägt sein (und umgekehrt), wenn diese von der anderen Seite wirken/Kraft aufbringen. Hierzu werden die Federn anders herum angeordnet und ziehen nun bspw. von unten an der Spindelmutter 12 anstatt von oben auf diese zu drücken.

Auch ist es jeweils möglich, die Kraftwirkungsrichtung der Kraftelemente 11 (z.B. Federn) auf die Spindelmutter 12 umzukehren. Dadurch wirkt bspw. kein Druck von oben mehr auf die Spindelmutter 12, sondern ein Zug nach oben. Dies ist möglich, indem Druckfedern 11 durch Zugfedern 11 ersetzt werden (oder umgekehrt) ohne die Anordnung zu ändern oder indem die gleiche Art von Kraftelement (Druckfeder bleibt Druckfeder) gewählt wird aber die Anordnung umgekehrt wird, wie im vorherigen Absatz beschrieben. Das Resultat ist nun, dass der Prozess der Aktivierung auch ohne Motor von statten gehen kann, da die Federn 11 die Spindelmutter 12 in die aktivierte Position drücken. Damit ist nun eine sehr schnelle Aktivierung möglich. Demensprechend erfolgt aber die Deaktivierung gegen die Federkraft, also unterstützt durch den Antrieb A1 und braucht so etwas länger. Dies kann vorteilhaft sein für Arbeiten, bei denen eine besonders schnelle Aktivierung nötig ist, die Deaktivierungszeit aber weniger kritisch ist. Dies ist bspw. bei Hüftgelenksunterstützungen für Hebetätigkeiten (vom Boden) der Fall. Will ein Nutzer etwas vom Boden aufheben so kann das System deaktiviert bleiben bis der Nutzer in gebückter Haltung am Boden etwas aufnimmt. Dann aber soll das System sehr schnell aktiviert werden und dem Nutzer beim Aufstehen helfen. Im Anschluss kann in aufgerichteter Position auch eine langsame Deaktivierung erfolgen. Aber auch bei Hebe-, Trage-, Schiebe- oder Ziehtätigkeiten oder anderen Tätigkeiten bei dem die Schulter und die oberen Extremitäten beansprucht sind, kann dies sinnvoll sein, abhängig von der jeweiligen Tätigkeit.

Auch kommen andere Antriebe, alternativ zu drehenden E-Motoren in Frage. Dazu gehören elektrische Linearantriebe, ein- oder doppelseitig (ohne zusätzliche Federelemente in Antriebssäule) wirkende pneumatische oder hydraulische Zylinder oder künstliche (v.a. pneumatische) Muskeln in allen Varianten, wobei jeweils der Antriebsstrang A1 und der Linearisierungsteil (bspw. Zahnstange oder Spindelwelle) durch diese ersetzt werden. Insbesondere sinnvoll ist ein Ersatz des Drehantriebs durch einen Linearantrieb (jeglicher Form), wenn dieser vollständig in der Antriebssäule, dem Verbindungselement 3 oder vollständig in Hebel 5/Verbindungsgestänge untergebracht ist. Außerdem sind selbstverständlich auch rotierende Antriebe, die nicht durch elektrischen Strom, sondern durch andere Medien angetrieben werden, wie hydraulische oder pneumatische Drehantriebe oder Verbrennungsmotoren möglich. Auch sei hier herausgestellt, dass abhängig vom benötigten Unterstützungsgrad kleinere oder größere Antriebe (und sonstige Komponenten) verwendet werden können, um ggf. Platz einzusparen.

Grundsätzlich ist auch noch festzustellen, dass der beschriebene Mechanismus und das Verfahren zwar für ein Exoskelett (Extremitätenunterstützungsvorrichtung) mit Arm- bzw. Schulterunterstützung beschrieben wurde und hier besonders sinnvoll ist, aber auch auf andere Körperbereiche angewendet werden kann. So ist es bspw. möglich, den gleichen Mechanismus zu verwenden, um den Unterstützungsgrad im Bereich von Hüfte oder Ellenbogen zu verändern (alle anderen Körperbereiche wie Knie, Wirbelsäule, Handgelenke, Fußgelenke sind auch möglich, falls sinnvoll). Selbstverständlich müssen hier kleinere konstruktive Anpassungen erfolgen und leichte Änderungen in Dimension und Anordnung von gewissen Komponenten vorgenommen werden. Grundsätzlich beschreibt der Mechanismus aber allgemein die Möglichkeit, ein Drehmoment/Unterstützungsmoment zu variieren, wenn der Ursprung des Drehmoments eine Kraft ist und der Abstand zum Drehzentrum eingestellt wird, um das Unterstützungsmoment zu verändern.

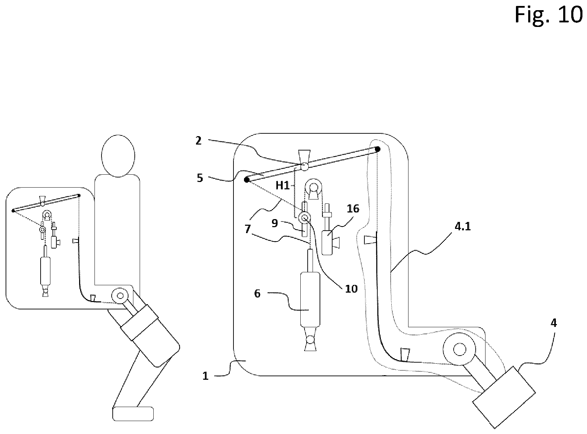

Fig. 10 zeigt hierzu beispielhaft und schematisch eine Ausgestaltung der erfindungsgemäßen Extremitätenunterstützungsvorrichtung für den Fall, dass die unterstütze Extremität Beine, hier Oberschenkel des Benutzers, sind. Das linke Teilbild zeigt die Vorrichtung an einem Benutzer, das rechte Teilbild zeigt nur die Vorrichtung selbst. Die Vorrichtung weist hier für jeden Oberschenkel einen Extremitätenangriff 4 auf, der eingerichtet ist, am Oberschenkel des Benutzers anzugreifen. Ein Extremitätenhebel 5 ist mit dem Extremitätenangriff 4 über ein Angriffverbindungselement 4.1, hier ein Seilzug, verbunden. Der Extremitätenhebel 5 ist um ein Drehgelenk 2 drehbar. Ein Zugübertragungselement 7, das auf einer dem Angriffverbindungselement 4.1 bezüglich des Drehgelenks 2 gegenüberliegenden Seite des Extremitätenhebels 5 am Extremitätenhebel 5 angreift, wird durch einen passiven Aktor 6 gezogen. Die Vorrichtung weist auch hier ein Distanzelement 10 auf, das den Abstand des Zugübertragungselementes 7 vom Drehgelenk 2 am Berührungspunkt des Übertragungselementes 7 mit dem Distanzelement 10 in zumindest einer Richtung begrenzt. Das Distanzelement 10 wird auch hier mittels eines Stellenmechanismus zur Veränderung des Distanzelementabstandes H1 des Distanzelements vom Drehgelenk bewegt. Der Stellmechanismus weist auch hier einen Stellaktor 16 auf, mittels dessen eine Kraft zur Veränderung des Distanzelementabstandes H1 auf das Distanzelement 10 ausübbar ist.

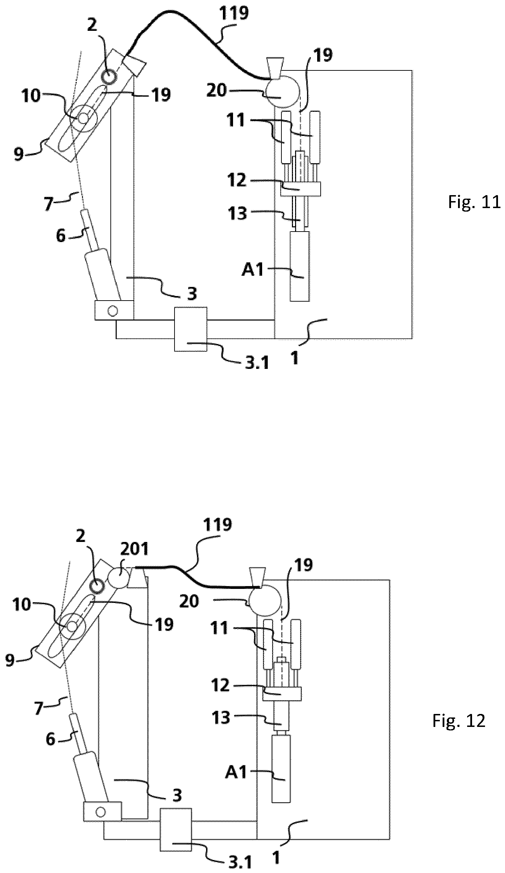

Figur 11 bis 15 zeigen Ausgestaltungen der Erfindung, in der der Stellaktor so angeordnet ist, dass er bei bestimmungsgemäßer Benutzung am Rücken des Benutzers angeordnet ist. Dadurch ist das Gewicht näher am Körper angebracht und ist somit weniger Bewegungen durch die verbunden Körperteile unterworfen. Geringere Trägheitskräfte und Momentenwirkungen sind die Folge, was das System insgesamt leichter für den Nutzer macht. In den Figuren 11 bis 14 ist der Extremitätenhebel 5 zur besseren Übersichtlichkeit ausgeblendet. Er ist diesen Beispielen aber dennoch vorgesehen. In den Figuren 11 bis 14 ist außerdem das Verbindungselement fest mit dem Führungselement verbunden, also vorzugsweise nicht drehbar oder gelenkig.

Bei den Ausgestaltungen der Figuren 11 bis 15 befindet sich der Antriebsstrang (zum Beispiel Motor in Verbindung mit Kupplung, Bremse (zusammen mit A1 gekennzeichnet) Spindelwelle 13 und Mutter 12 oder einem Hydraulik- oder Pneumatikzylinder) am Rücken des Trägers oder an der Hüfte angeordnet. Das Torsomodul 1 erstreckt sich dabei entlang des Rückens und enthält den Anstriebsstrang. Möglich sind auch andere Orte (bspw. am Bein, am Bauch). Besonders vorteilhaft ist aber eine Anordnung hinter dem Nutzer auf Hüft- oder Rückenhöhe. Die Kraft wird dort über Seilzüge 19 als Stellzugübertragungselemente 19 bis auf das Distanzelement 10 übertragen. Die Seilzüge 19 werden dabei bspw. in einer Bowdenzughülle 119 bis zum Distanzelement 10 geführt, welches wie in den entsprechenden anderen Beispielen in einem Führungselement 9 geführt wird und welches wiederum am Verbindungselement 3 angebracht ist. Vorzugsweise werden vor allem Zugkräfte übertragen, die am Ende in Richtung der Ausrichtung des Führungselements 9 gerichtet sind, wie dies in Figur 11 gezeigt ist. Bevorzugt werden aber sonst im Wesentlichen keine Kräfte vom Antriebsstrang auf das Verbindungselement 3 übertragen, die ggf. den ganzen Aufbau dieser Seite bewegen würden (dies wird gerade möglich mit der Bowdenzuglitze 19 in der Bowdenzughülle 119, die neben der durch den Seilzug übertragenen Kraft vor allem Reaktionskräfte der Bowdenzuglitze 19 parallel dazu überträgt). Auch können die ein oder mehreren Seilzüge dabei keine, eine oder mehrere Umlenkrollen passieren. Auch muss die Bowdenzughülle 119 nicht nahe an das Distanzelement 10 geführt werden, sondern kann ggf. auch weiter entfernt am Verbindungselement 3 angreifen.

In Figur 11 wird die Bowdenzughülle 119 von einem Ende des Antriebsstrangs, an dem die Kraft zur Veränderung des Distanzelementabstandes bewirkbar ist, so an das Führungselement 9 herangeführt, dass das Zugelement 19 diese in Richtung des Führungselementes 9 verlässt. Bevor das Stellzugübertragungselement 19 hinter dem Antriebsstrang in die Bowdenzughülle 119 eintritt (kontaktiert mit Torsomodul 1 oder damit verbundenem Teil und auf Seite des Führungselements 9 mit Führungselement 9 oder damit verbundenem Teil, symbolisiert durch Kegelstümpfe), läuft es im gezeigten Beispiel über eine Umlenkrolle 20, die es in jene Richtung umlenkt, die die Bowdenzughülle 119 an diesem Ende hat. Der Bowdenzug als Stellzugübertragungselement 19 verläuft dann vom Antriebsstrang zum Distanzelement 10, was bei bestimmungsgemäßer Verwendung hier zum Beispiel vom Rücken zur Seite des Benutzers wäre.

Figur 12 zeigt eine Ausgestaltung entsprechend jener in Figur 11 gezeigten, in der jedoch eine zusätzliche Umlenkrolle 201 an jenem dem Stellzugübertragungselement 19 zugewandten Ende des Führungselementes 9 angebracht ist, um eine Richtungsänderung des Stellzugübertragungselementes 19 in Richtung des Führungselements 9 zu bewirken.

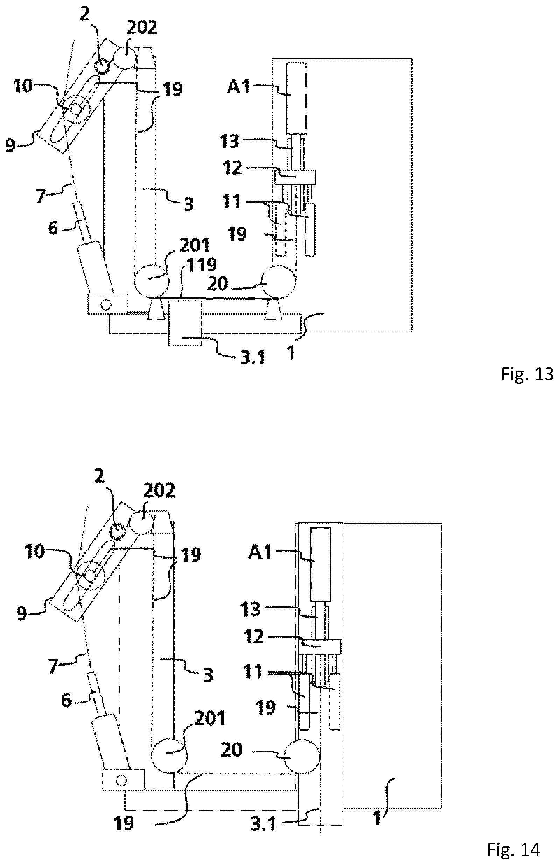

Figur 13 zeigt eine Variante, in welcher der Antriebsstrang umgekehrt gegenüber den Figuren 11 und 12 angeordnet ist, und wo unten zwei Umlenkrollen 20 und 201 mit dazwischen geführter Bowdenzughülle 119 das Seil 19 zum Verbindungselement 3 führen, in/an welchem dieses bis zu einer weiteren Umlenkrolle 202 geführt wird, welche wiederum die finale Richtung in Ausrichtung des Führungselementes 9 einstellt. Diverse weitere Verbindungen, Positionierungen und Verläufe des Stellzugübertragungselements 19 zwischen dem Torsomodul 1 und dem Führungselement 9 bzw. dem Distanzelement 10 sind möglich. Auch können die Antriebstränge am Torsomodul 1 anders ausgerichtet sein. Beispielsweise können diese senkrecht zur aktuellen Ausrichtung stehen. Dann können ggf. weitere oder weniger Umlenkrollen vorgesehen sein.

Alternativ ist auch eine Realisierung ohne Bowdenzughüllen möglich, wenn alle Seilzugelemente 19 von Umlenkrolle zu Umlenkrolle 20, 201, 202 etc. bis zum Distanzelement 10 geleitet werden. Dabei sollten vorteilhafterweise jedoch Abstände zwischen den einzelnen Umlenkelementen in der Architektur bei Benutzung nicht variieren. Ein Beispiel hierfür ist in Figur 14 gezeigt. Nicht variierende Abstände können zum Beispiel dadurch bewirkt werden, dass die Achse eines gegebenenfalls vorgesehenen Gelenks 3.1, um welches sich hier das Verbindungselement 3 relativ zum Torsomodul 1 drehen kann, sich mit dem Zugelement 19 (ausgehend von der Mutter 12) auf einer Achse befindet. Ggf. ist es hier sinnvoll, dass die gesamte Antriebseinheit ebenfalls drehbar relativ zum Torsomodul 1 um das Gelenk 3.1 gelagert ist.

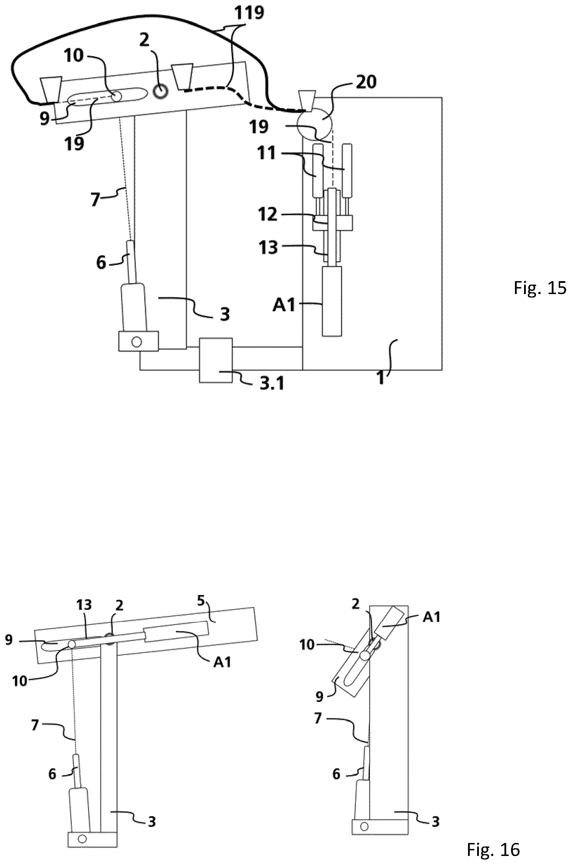

Figur 15 zeigt beispielhaft eine Ausgestaltung, die für alle Varianten einsetzbar ist, bei denen das Führungselement 9 und das Distanzelement 10 im Extremitätenhebel 5 selbst angeordnet ist. Hier kann die Bowdenzughülle 119 von hinten (durchgezogene Linie), von vorn (gestrichelte Linie) oder an einer anderen beliebigen Stelle angreifen, wobei jeweils die Richtung der austretenden Litze 19 als Stellzugübertragungselement idealerweise in Richtung des Führungselements 9 zeigt. Alternativ oder zusätzlich können zusätzliche Umlenkrollen 20 vorhanden sein, die den Verlauf des Stellzugübertragungselmentes in diese Richtung verändern. Derartige Einrichtungen können auch im Inneren des Extremitätenhebels 5 vorgesehen sein.

Alle Antriebe (Motoren, Kupplung, Bremse) wie auch die Linearisierungseinheit (z.B. Spindelwelle), die in den Figuren gezeigt sind, können auch durch Linearmotoren oder Hydraulik- oder Pneumatikzylinder ersetzt werden. Insbesondere in Fig. 8 können bspw. alle dort sichtbaren Teile im Extemitätenhebel 5 (außer dem Führungselement 9 und dem Distanzelement 10) ersetzt werden durch einen einzigen Hydraulikzylinder. Dies ist beispielhaft im linken Teilbild von Figur 16 gezeigt. Auch beispielsweise in Fig. 9 ist dies möglich. Der Hydraulikzylinder als Antrieb A1 kann dabei die Antriebsteile ersetzen und nach wie vor über eine Seilrolle mit dem Distanzelement 10 verbunden sein oder in Verlängerung 9 ausgerichtet in Richtung von 9 angeordnet sein und so die Position von 10 kontrollieren. Dies ist beispielhaft im rechten Teilbild von Figur 16 gezeigt. Selbstverständlich sind auch hier wieder andere Positionen und Orientierungen des Hydraulikzylinders A1 möglich, wenn entsprechend Kräfte von diesem über Umlenkrollen und Zugelemente bis zu 1 übertragen werden.

Das Zugelement 6 als passiver Aktor 6 kann auch zum Beispiel im Innern des Verbindungselements 3 angeordnet sein, wenn das Zugübertragungselement 7 über eine Umlenkrolle mit diesem verbunden ist. Das Zugelement 6 muss keine Zugfeder sein, es kann auch eine Druckfeder sein, welche vorzugsweise im Innern des Verbindungselementes so angeordnet ist, dass sie komprimiert wird, wenn β wie in Figur 3 gezeigt sich verkleinert.

Das System vereint als semipassives System die Vorteile von passiven Exoskeletten (geringes Gewicht, geringer/kein Energieverbrauch) aktiven Exoskeletten (hohe dynamische Anpassungsfähigkeit). Die Verstellung des Unterstützungsgrades kann stufenlos von 0-100% erfolgen und eine vollständige Deaktivierung kann möglich sein, wodurch sich der Nutzer passiv frei bewegen kann. Die Verstellung erfolgt außerdem sehr schnell bei Aktivierung und extrem schnell (<0.5 Sekunden) bei Deaktivierung, wodurch der Nutzer sehr dynamisch bei seinen Tätigkeiten unterstützt werden kann, ohne lange warten zu müssen (auf Aktivierung) oder in Positionen mit nach oben gedrückten Armen verharren muss (Deaktivierung). Der Aufbau und die Integration von Aktorik und weiteren Komponenten sind außerdem sehr platzsparend und leicht. Das Blockierelement 17 erlaubt eine passive Unterstützung des Systems ohne Stromverbrauch. Auf diese Weise können sowohl statische Arbeiten (bspw. Überkopfarbeiten) als auch hochdynamische Arbeiten (Heben, Tragen, Schieben Ziehen) mit einem einzigen System ausgeführt werden, wobei der Energieverbrauch und somit das Gewicht aufgrund der semi-passiven Natur minimiert ist. Durch geometrische Parameter des Führungselements 9 (bspw. Winkel α) kann außerdem der Verlauf des Unterstützungsmomentes leicht verändert werden, um eine lastfallspezifische Unterstützung zu ermöglichen die den biomechanischen Ansprüchen genügt. Die Trennung von Kraftelement und angetriebener Unterstützungsgradverstellung verbessert auch die Sicherheit des Exoskeletts im Vergleich zu voll aktiven Systemen immens, in denen der Antrieb selbst direkt die Unterstützungskraft bzw. das Unterstützungsmoment generiert.

Technische Anwendungsgebiete sind manuelle Handhabungstätigkeiten wie Tragen und Heben, aber auch Ziehen, Schieben und Überkopfarbeiten überall dort, wo Menschen körperlich (schwer) arbeiten. Dies trifft insbesondere auf folgende Bereiche zu: Logistik, Produktion, Militär, Forstwirtschaft und Garten- und Landschaftsbau, Pflege und Medizin, Handwerk, Baugewerbe. Ein solches Exoskelett kann erstmals mehrere biomechanisch sehr unterschiedliche (Heben, Tragen, Ziehen, Schieben und Überkopfarbeiten) Tätigkeiten in einem einzigen System unterstützen. Auch sind weitere Anwendungen für die Unterstützung anderer Körperbereich denkbar (Hüftunterstützung, Knieunterstützung, Ellenbogenunterstützung o.Ä.) zur Unterstützung körperlicher Arbeiten allgemein.

## Patentansprüche

1. Extremitätenunterstützungsvorrichtung zur Unterstützung einer Extremität eines Benutzers, aufweisend
einen Extremitätenangriff (4), der eingerichtet ist, an der Extremität des Benutzers anzugreifen,
einen Extremitätenhebel (5), mit dem der Extremitätenangriff (4) über ein Angriffverbindungselement (4.1) verbunden ist,
ein Drehgelenk (2), um das der Extremitätenhebel (5) drehbar ist,
ein Zugübertragungselement (7), das auf einer dem Angriffverbindungselement (4.1) bezüglich des Drehgelenks (2) gegenüberliegenden Seite des Extremitätenhebels am Extremitätenhebel (5) angreift,
ein **Distanzelement** (10), das einen Abstand des Zugübertragungselements (7) vom Drehgelenk (2) am Berührungspunkt des Zugübertragungselements (7) mit dem Distanzelement (10) in zumindest einer Richtung begrenzt,
wobei
das Distanzelement (10) mittels eines **Stellmechanismus** zur Veränderung eines Distanzelementabstandes (H1) des Distanzelementes vom Drehgelenk (2) bewegbar ist,
wobei der Stellmechanismus einen **Stellaktor** (16) aufweist, mittels dessen eine Kraft zur Veränderung des Distanzelementabstandes (H1) auf das Distanzelement (10) ausübbar ist.

2. Extremitätenunterstützungsvorrichtung nach dem vorhergehenden Anspruch,
wobei ein nicht am Extremitätenhebel (5) angreifendes Ende des Zugübertragungselementes (7) an einem **passiven Aktor** (6) angreift, der eingerichtet ist, eine Zugkraft auf das Zugübertragungselement (7) auszuüben, wobei mit dem Zugübertragungselement die Zugkraft auf den Extremitätenhebel (5) übertragbar ist, und/oder
weiter aufweisend ein **Torsomodul** (1), das eingerichtet ist, am Torso, vorzugsweise am Becken, des Benutzers anzugreifen, wobei der Stellmechanismus an dem Torsomodul angeordnet ist, wobei der Extremitätenhebel (5) um das Drehgelenk (2) gegenüber dem Torsomodul (1) drehbar ist.

3. Extremitätenunterstützungsvorrichtung nach einem der vorhergehenden Ansprüche,
aufweisend ein **Führungselement** (9), entlang dem das Distanzelement (10) zur Veränderung des Distanzelementabstandes bewegbar ist, wobei vorzugsweise das Führungselement (9) gegenüber dem Stellmechanismus fixiert oder fixierbar ist und/oder wobei der Extremitätenhebel (5) gegenüber dem Führungselement (9) drehbar ist, wobei vorzugsweise das Führungselement (9) über ein **Führungsgelenk** mit dem Stellmechanismus verbunden ist, wobei das Führungsgelenk eine Arretierungsvorrichtung aufweist, mit dem eine Drehung des Führungselementes (9) um das Führungsgelenk arretierbar ist, wobei vorzugsweise das Führungselement (9) eine **Schiene** aufweist, durch die das Distanzelement (10) geführt wird, wobei die Schiene gerade oder gekrümmt, vorzugsweise monoton gekrümmt ist.

4. Extremitätenunterstützungsvorrichtung nach einem der vorhergehen Ansprüche, wobei das Distanzelement (10) den Abstand des Zugübertragungselementes (7) vom Drehgelenk (2) **in Richtung vom Drehgelenk weg begrenzt,** und wobei die durch den Stellmechanismus auf das Distanzelement (10) ausübbare Kraft zur Veränderung des Distanzelementabstandes in Richtung auf das Drehgelenk hin ausübbar ist, und/oder
wobei das Distanzelement (10) den Abstand des Zugübertragungselementes (7) vom Drehgelenk **in Richtung des Drehgelenkes begrenzt,** und wobei die durch den Stellmechanismus auf das Distanzelement (10) ausübbare Kraft zur Veränderung des Distanzelementabstandes in Richtung vom Drehgelenk weg ausübbar ist.

5. Extremitätenunterstützungsvorrichtung nach einem der vorhergehenden Ansprüche, wobei das Zugübertagungselement (7) ein **erstes Zugübertragunsteilelement (7.1)** und **ein zweites Zugübertragungsteilement (7.2)** aufweist,
wobei das erste und das zweite Zugübertragunsteilelement das Distanzelement (10) auf gegenüberliegenden Seite passieren, wobei das erste und das zweite Zugübertragungsteilelement so bemessen ist, dass in jeder Stellung des Extremitätenhebels (5) zumindest eines der Zugübertragungsteilelemente das Distanzelement (10) berührt, und/oder
wobei das Distanzelement (10) **jeweils eine Rolle für jede Richtung** aufweist, in die es den Abstand des Zugübertragungselementes (7) vom Drehgelenk (2) begrenzt, wobei das Zugübertragungselement (7) die jeweilige Rolle, wenn diese den Abstand begrenzt, an jener Seite berührt, die der Richtung entgegengesetzt ist, in der die jeweilige Rolle den Abstand des Zugübertragungselementes (7) vom Drehgelenk begrenzt, und/oder
wobei das Drehgelenk (2) mit dem Stellmechanismus oder dem Torsomodul (1) über ein **Verbindungselement (3)** fest verbunden ist, wobei das Verbindungselement (3) so ausgestaltet ist, dass es, wenn die Extremitätenunterstützungsvorrichtung vom Benutzer bestimmungsgemäß getragen wird **entlang des Torsos** des Benutzers verläuft, wobei eine Kraftwirkungsrichtung des Stellaktors (16) parallel verläuft zum Verlauf des Verbindungselementes.

6. Extremitätenunterstützungsvorrichtung nach einem der vorhergehenden Ansprüche, wobei der **Stellaktor (16) am Extremitätenhebel (5) auf der gleichen Seite** bezüglich des Drehgelenkes (2) angeordnet ist **wie** der **Extremitätenangriff,** wobei eine Kraftwirkungsrichtung des Stellaktors parallel zu einer Längsrichtung des Extremitätenhebels dort, wo der Stellaktor angeordent ist, verläuft, und/oder
wobei der Stellaktor (16) einen **Drehantrieb,** eine durch den Drehantrieb drehbare Spindelwelle (13) und eine auf der Spindelwelle laufende Spindelmutter (12) aufweist, wobei die Kraft auf das Distanzelement (10) durch die **Spindelmutter** (12) bewirkbar ist, und/oder
wobei der **Stellmechanismus** zumindest ein **elastisches Element,** vorzugsweise zumindest ein Federelement (11), aufweist, das so angeordnet ist, dass es durch den Stellaktor (16) auslenkbar ist, und eine Kraft bewirkt, die der durch den Stellaktor ausübbaren und die Veränderung des Distanzelementabstandes (H1) bewirkenden Kraft entgegengerichtet ist, und/oder
wobei der Stellaktor (16) einen Drehantrieb, einen **Linearisierungsmechanismus,** mit dem ein vom Drehantrieb bewirktes Drehmoment in die Kraft zur Veränderung des Distanzelementabstandes übertragbar ist, sowie eine Kupplung (18) aufweist, mit der die Übertragung des Drehmomentes in die Kraft herstellbar und lösbar ist.

7. Extremitätenunterstützungsvorrichtung nach einem der vorhergehenden Ansprüche, wobei der Stellmechanismus zumindest ein **Blockierelement** (17) aufweist, mit dem der Distanzelementabstand (H1) des Distanzelementes (10) vom Drehgelenk fixierbar ist, und/oder
wobei der Stellmechanismus ein erstes **Stellzugübertragungselement (19)** aufweist, wobei das erste Stellzugübertragungselement einerseits mit dem **Stellaktor** (16) derart **verbunden** ist, dass durch den Stellaktor (16) eine Zugkraft auf das erste Stellzugübertragungselement (19) ausübbar ist, und wobei das erste Stellzugübertragungselement (19) andererseits mit dem **Distanzelement** (10) derart **kontaktiert** ist, dass mit dem ersten Stellzugübertragungselement (19) die Kraft zur Veränderung des Distanzelementabstandes auf das Distanzelement (10) ausübbar ist,
wobei vorzugsweise das erste Stellzugübertragungselement (19) in seinem Verlauf vom Stellaktor (16) zum Distanzelement (10) zumindest ein **Umlenkelement** (20) passiert und vorzugsweise an jenem dem Distanzelement entlang des Verlaufs des Stellzugübertragungselements nächstgelegenen der zumindest einen Umlenkelemente (20) die Richtung seines Verlaufs in Richtung des Distanzelementes ändert,
wobei vorzugsweise das Stellzugübertragungselement (19) zumindest in einem Teil seines Verlaufs in einer Bowdenzughülle (119) geführt ist.

8. Extremitätenunterstützungsvorrichtung nach einem der Ansprüche 2 bis 7, wobei der Stellaktor (16) so am Torsomodul angeordnet ist, dass er bei bestimmungsgemäßer Benutzung der Extremitätenunterstützungsvorrichtung durch den Benutzer am Rücken des Benutzers angeordnet ist, und/oder aufweisend ein **weiteres Stellzugübertragungselement (19.1, 19.2),** das mit dem Distanzelement (10) auf einer dem ersten Stellzugübertragungselement (19.1, 19.2) **gegenüberliegenden Seite** des Distanzelementes (10) kontaktiert ist und das mit dem Stellaktor (16) derart verbunden ist, dass durch den Stellaktor (16) eine Zugkraft auf das weitere Stellzugübertragungselement (19.1, 19.2) ausübbar ist, die der auf das erste Stellzugübertragungselement (19.1, 19.2) ausübbaren **Zugkraft entgegen gerichtet** ist, wobei vorzugsweise das weitere Stellzugübertragungselement (19.1, 19.2) in seinem Verlauf vom Stellaktor (16) zum Distanzelement (10) mindestens ein weiteres Umlenkelement (20.1, 20.2, 20.3) passiert und an dem weiteren Umlenkelement (20.1, 20.2, 20.3) die Richtung seines Verlaufs in Richtung des Distanzelementes ändert,
wobei vorzugsweise der Stellaktor (6) einen **Drehantrieb** und eine durch den Drehantrieb drehbare **Rolle** aufweist, wobei das Stellzugübertragungselement (19) an einer Oberfläche der Rolle befestigt ist, so dass es durch Drehung der Rolle auf die Rolle aufwickelbar und/oder von der Rolle abwickelbar ist, wobei vorzugsweise die Rolle über eine Kupplung mit dem Drehantrieb verbunden ist.

9. Extremitätenunterstützungsvorrichtung nach einem der Ansprüche 1 bis 7, wobei das Distanzelement (10) **direkt an dem Stellaktor** (16) fest angeordnet ist, oder
wobei der Stellmechanismus eine **Kegelradverbindung** (21) aufweist, in der ein erstes Kegelrad durch den Stellaktor antreibbar ist und ein zweites Kegelrad mit einer Spindel verbunden ist, durch deren Drehung auf das Distanzelement (10) die Kraft zur Veränderung des Distanzelementabstandes ausübbar ist, oder
wobei der Stellmechanismus eine **Kreuzgelenkverbindung** (22) aufweist, mit der die Kraft zur Veränderung des Distanzelementabstandes vom Stellaktor (16) auf das Distanzelement (10) übertragbar ist, oder
wobei der Stellmechanismus ein durch den Stellaktor antreibbares **Zahnrad** (24) aufweist, sowie außerdem eine **Zahnstange** (25) aufweist, in die das Zahnrad eingreift,
wobei die Zahnstange mit dem Distanzelement (10) verbunden ist, so dass die Kraft zur Veränderung des Distanzelementabstandes durch die Zahnstange (25) auf das Distanzelement (10) übertragbar ist, oder
wobei der Stellmechanismus ein durch den Stellaktor antreibbares **Schneckenrad** (26) aufweist, sowie eine Schneckenwelle (27) aufweist, in die das Schneckenrad eingreift, wobei die Schneckenwelle mit dem Distanzelement (10) verbunden ist, so dass die Kraft zur Veränderung des Distanzelementabstandes durch die Schneckenwelle (25) auf das Distanzelement (10) übertragbar ist, oder
wobei der Stellaktor (16) einen Drehantrieb, eine durch den Drehantrieb drehbare **Spindelwelle** (13) und eine auf der Spindelwelle laufende Spindelmutter (12) aufweist,
wobei die Extremitätenunterstützungsvorrichtung weiter eine Kette (29) von zumindest zwei über Verbindungsgelenke miteinander verbundenen Gliedern aufweist, von denen ein erstes der Glieder an der Spindelmutter (12) angreift und ein letztes der Glieder an dem Distanzelement (10) angreift,
wobei vorzugsweise die Glieder an den Verbindungsgelenken jeweils in zumindest einer Schiene (28) geführt sind.

10. Extremitätenunterstützungsvorrichtung nach einem der vorhergehenden Ansprüche,
wobei der Stellaktor (16) einen Drehantrieb und eine **Welle** aufweist, die nebeneinander und mit zueinander parallellen Drehachsen angeordnet sind und die über ein Zahnradgetriebe miteinander kinematisch verbunden sind, und/oder
wobei der Stellaktor zumindest einen Hydraulikzylinder aufweist, und/oder wobei die Extremitätenunterstützungsvorrichtung ein am Extremitätenhebel angebrachtes Verschiebeelement aufweist,
wobei das **Zugübertragungselement** (7) mit einem seiner Enden mit dem **Verschiebeelement** fest verbunden ist, wobei das Verschiebeelement in einer senkrecht zur Drehachse stehenden Ebene entlang einer Längsrichtung des Extremitätenhebels und/oder in Richtung senkrecht zu der Längsrichtung des Extremitätenhebels am Extremitätenhebel verschiebbar ist.

11. Extremitätenunterstützungsvorrichtung nach einem der vorhergehenden Ansprüche, aufweisend einen **Schalter** und/oder einen Schieberegler, mittels dessen der Distanzelementabstand (H1) einstellbar ist, und/oder aufweisend einen **Näherungssensor,** einen Kraft-sensor und/oder einen Drucksensor, der eingerichtet ist, ein Gewicht einer aufzunehmenden Last zu erfassen, wobei der Stellmechanismus eingerichtet ist, den Distanzelementabstand (H1) basierend auf dem erfassten Gewicht einzustellen, und/oder aufweisend einen **Muskelaktivitätssignal-Sensor,** mit dem Aktivitätssignale zumindest eines Muskels der Extremität messbar sind, wobei der Stellmechanismus eingerichtet, ist, den Distanzelementabstand (H1) basierend auf dem gemessenen Aktivitätssignal einzustellen.

12. Extremitätenunterstützungsvorrichtung nach einem der vorhergehenden Ansprüche, wobei die Extremität ein **Arm** des Benutzers ist und die Extremitätenunterstützungsvorrichtung eine Armunterstützungsvorrichtung oder eine Schulterunterstützungsvorrichtung ist, und/oder
wobei das **Zugübertragungselement** (7) auf der dem Angriffverbindungselement (4.1) bezüglich des Drehgelenks (2) gegenüberliegenden Seite des Extremitätenhebels am Extremitätenhebel (5) befestigt ist, und/oder
wobei das Zugübertragunselement (7) und/oder das Stellzugübertragungselement (19) zumindest ein Seil und/oder zumindest eine Kette und/oder zumindest einen Riemen aufweist oder ist.

13. **Verfahren** zum Heben, Halten und/oder Tragen einer Last und/oder zum Ausführen von Überkopftätigkeiten, wobei ein Benutzer eine Extremitätenunterstützungsvorrichtung nach einem der vorhergehenden Ansprüche trägt, und mit Unterstützung durch die Extremitätenunterstützungsvorrichtung die Last anhebt, hält und/oder trägt und/oder eine Tätigkeit mit über Kopfhöhe erhobenen Händen ausführt.

14. Verfahren nach dem vorhergehenden Anspruch, wobei der Distanzelementabstand vor und/oder während dem Anheben, Halten, Tragen und/oder Ausführen der Tätigkeit mit über Kopfhöhe erhobenen Händen auf einen ersten Wert eingestellt wird, anschließend der Benutzer die Last anhebt, hält, trägt und/oder die Tätigkeit mit über Kopfhöhe erhobenen Händen ausführt, der Benutzer dann die Last abstellt und anschließend der Distanzelementabstand auf einen zweiten Wert, der kleiner ist als der erste Wert, eingestellt wird,
wobei vorzugsweise während der Distanzelementabstand auf den ersten Wert eingestellt ist, der Stellaktor (16) aktiviert ist, vorzugsweise mit einer Spannung beaufschlagt wird und zum Einstellen auf den zweiten Wert deaktiviert wird, vorzugsweise die Spannung abgestellt wird,
wobei vorzugsweise der Stellaktor (16) einen Drehantrieb, einen Linearisierungsmechanismus, mit dem ein vom Drehantrieb bewirktes Drehmoment in die Kraft zur Veränderung des Distanzelementabstandes übertragbar ist, sowie eine Kupplung (18) aufweist, mit der die Übertragung des Drehmomentes in die Kraft herstellbar und lösbar ist,
wobei vor dem Einstellen des Distanzelementabstandes auf den ersten Wert mit der Kupplung die Übertragung des Drehmomentes in die Kraft zwischen dem Drehantrieb (16) und dem Distanzelement (10) hergestellt wird,
und wobei zum Einstellen des Distanzelementabstandes auf den zweiten Wert die Übertragung des Drehmomentes in die Kraft durch die Kupplung gelöst wird.

15. Verfahren nach einem der Ansprüche 13 und 14,
wobei der Stellmechanismus zumindest ein Blockierelement (17) aufweist, mit der der Distanzelementabstand (H1) des Distanzelementes (10) vom Drehgelenk fixierbar ist,
wobei nach dem Einstellen des Distanzelementabstandes auf den ersten Wert der Distanzelementabstand mit dem Blockierelement fixiert wird, und wobei zum Einstellen des Distanzelementabstandes auf den zweiten Wert das Blockierelement gelöst wird, und/oder
wobei der Stellaktor (16) einen Drehantrieb, einen Linearisierungsmechanismus, mit dem ein vom Drehantrieb bewirktes Drehmoment in die Kraft zur Veränderung des Distanzelementabstandes übertragbar ist, sowie eine Kupplung (18) aufweist, mit der die Übertragung des Drehmomentes in die Kraft herstellbar und lösbar ist, und
wobei der Stellmechanismus zumindest ein Blockierelement (17) aufweist, mit der der Distanzelementabstand (H1) des Distanzelementes (10) vom Drehgelenk fixierbar ist,
wobei vor dem Einstellen des Distanzelementabstandes auf den ersten Wert mit der Kupplung die Übertragung des Drehmomentes in die Kraft zwischen dem Drehantrieb (16) und dem Distanzelement (10) hergestellt wird,
wobei nach dem Einstellen des Distanzelementabstandes auf den ersten Wert der Distanzelementabstand mit dem Blockierelement fixiert wird, und wobei zum Einstellen des Distanzelementabstandes auf den zweiten Wert das Blockierelement und die Kupplung gelöst werden.

## Claims

1. An extremity support device for supporting an extremity of a user, said device comprising
an extremity engagement unit (4), which is configured to engage on the extremity of the user,
an extremity lever (5), to which the extremity engagement unit (4) is connected via an engagement unit connection element (4.1),
a swivel joint (2), about which the extremity lever (5) is rotatable,
a pull transmission element (7), which engages on the extremity lever (5) on a side of the extremity lever which is located opposite the engagement unit connection element (4.1) in relation to the swivel joint (2),
a **spacer element** (10), which in at least one direction delimits a distance of the pull transmission element (7) from the swivel joint (2) at the point of contact of the pull transmission element (7) with the spacer element (10),
wherein
the spacer element (10) is movable by means of a **control mechanism** to change the spacer element distance (H1) of the spacer element from the swivel joint (2),
wherein the control mechanism comprises a **control actuator** (16), by means of which a force to change the spacer element distance (H1) is exertable on the spacer element (10).

2. The extremity support device according to the preceding claim,
wherein an end of the pull transmission element (7) not engaging on the extremity lever (5) engages on a **passive actuator** (6), which is configured to exert a pulling force on the pull transmission element (7), wherein the pulling force is transmittable to the extremity lever (5) by means of the pull transmission element, and/or
further comprising a **torso module** (1), which is configured to engage on the torso, preferably on the pelvis, of the user, wherein the control mechanism is arranged on the torso module, wherein the extremity lever (5) is rotatable about the swivel joint (2) relative to the torso module (1).

3. The extremity support device according to any one of the preceding claims,
comprising a **guide element** (9), along which the spacer element (10) is movable to change the spacer element distance, wherein preferably the guide element (9) is fixed or fixable relative to the control mechanism, and/or wherein the extremity lever (5) is rotatable relative to the guide element (9), wherein preferably the guide element (9) is connected via a **guide joint** to the control mechanism, wherein the guide joint has a locking device, by means of which a rotation of the guide element (9) about the guide joint is lockable, wherein preferably the guide element (9) comprises a **rail,** by which the spacer element (10) is guided, wherein the rail is straight or curved, preferably is curved monotonically.

4. The extremity support device according to any one of the preceding claims, wherein the spacer element (10) delimits the distance of the pull transmission element (7) from the swivel joint (2) **in the direction away from the swivel joint,** and wherein the force exertable on the spacer element (10) by the control mechanism is exertable in the direction of the swivel joint to change the spacer element distance, and/or
wherein the spacer element (10) delimits the distance of the pull transmission element (7) from the swivel joint **in the direction of the swivel joint,** and wherein the force exertable on the spacer element (10) by the control mechanism to change the spacer element distance is exertable in the direction away from the swivel joint .

5. The extremity support device according to any one of the preceding claims, wherein the pull transmission element (7) has a **first pull transmission sub-element (7.1) and a second pull transmission sub-element (7.2),**
wherein the first and the second pull transmission sub-element pass the spacer element (10) on opposite sides, wherein the first and the second pull transmission sub-element are dimensioned such that, in each position of the extremity lever (5), at least one of the pull transmission sub-elements touches the spacer element (10), and/or
wherein the spacer element (10) has a respective roller for each direction in which it delimits the distance of the pull transmission element (7) from the swivel joint (2), wherein the pull transmission element (7) touches the respective roller, with the latter delimiting the distance, on the side opposite the direction in which the respective roller delimits the distance of the pull transmission element (7) from the swivel joint, and/or
wherein the swivel joint (2) is fixedly connected to the control mechanism or the torso module (1) via a **connection element (3),** wherein the connection element (3) is configured such that it, when the extremity support device is worn as intended by the user, runs **along the torso** of the user, wherein a force action direction of the control actuator (16) runs parallel to the course of the connection element.

6. The extremity support device according to any one of the preceding claims, wherein the **control actuator (16) on the extremity lever (5) is arranged on the same side** in relation to the swivel joint (2) **as the extremity engagement unit,** wherein a force action direction of the control actuator runs parallel to a longitudinal direction of the extremity lever at the site where the control actuator is arranged, and/or
wherein the control actuator (16) has a **rotary drive,** a spindle shaft (13) rotatable by the rotary drive, and a spindle nut (12) running on the spindle shaft, wherein the force on the spacer element (10) is producible by the **spindle nut** (12), and/or
wherein the **control mechanism**comprises at least one **elastic element,** preferably at least one spring element (11), which is arranged such that it is deflectable by the control actuator (16) and produces a force that is directed opposite the force that is exertable by the control actuator and that brings about the change in the spacer element distance (H1), and/or
wherein the control actuator (16) comprises a rotary drive, a **linearization mechanism,** by means of which a torque produced by the rotary drive is transformable into the force for changing the spacer element distance, and also a coupling (18), by means of which the transformation of the torque into the force is establishable and releasable.

7. The extremity support device according to any one of the preceding claims, wherein the control mechanism comprises at least one **blocking element** (17), by means of which the spacer element distance (H1) of the spacer element (10) from the swivel joint is fixable, and/or
wherein the control mechanism comprises a first **control pull transmission element (19),** wherein the first control pull transmission element on the one hand is **connected** to the **control actuator** (16) in such a way that a pulling force is exertable by the control actuator (16) onto the first control pull transmission element (19), and wherein the first control pull transmission element (19) on the other hand is **contacted** with the **spacer element** (10) in such a way that the force for changing the spacer element distance is exertable on the spacer element (10) by means of the first control pull transmission element (19),
wherein preferably the first control pull transmission element (19), in its course from the control actuator (16) to the spacer element (10), passes at least one **deflection element** (20) and, at the deflection element of the at least one deflection element (20) located closest to the spacer element along the course of the control pull transmission element, preferably changes the direction of its course in the direction of the spacer element,
wherein preferably the control pull transmission element (19) is guided at least over part of its course in a Bowden cable sheath (119).

8. The extremity support device according to any one of claims 2 to 7, wherein the control actuator (16) is arranged on the torso module such that it is arranged at the back of the user when the extremity support device is used as intended by the user, and/or
comprising a **further control pull transmission element (19.1, 19.2),** which is contacted with the spacer element (10) on a side of the spacer element (10) **located opposite** the first control pull transmission element (19.1, 19.2), and which is connected to the control actuator (16) in such a way that a pulling force, which is **directed opposite the pulling force** exertable on the first control pull transmission element (19.1, 19.2), is exertable on the further control pull transmission element (19.1, 19.2) by the control actuator (16), wherein preferably the further control pull transmission element (19.1, 19.2), in its course from the control actuator (16) to the spacer element (10), passes at least one further deflection element (20.1, 20.2, 20.3) and, at the further deflection element (20.1, 20.2, 20.3), changes the direction of its course in the direction of the spacer element,
wherein preferably the control actuator (6) comprises a **rotary drive** and a **roll** rotatable by the rotary drive, wherein the control pull transmission element (19) is secured to a surface of the roll, such that it can be wound onto the roll and/or unwound from the roll by rotating the roll, wherein the roll is preferably connected to the rotary drive via a coupling.

9. The extremity support device according to any one of claims 1 to 7, wherein the spacer element (10) is fixedly arranged **directly on the control actuator** (16), or
wherein the control mechanism comprises a **bevel gear connection** (21), in which a first bevel gear is driveable by the control actuator and a second bevel gear is connected to a spindle, by means of the rotation of which the force to change the spacer element distance is exertable onto the spacer element (10), or
wherein the control mechanism comprises a **universal joint connection** (22), by means of which a force to change the spacer element distance is transmittable from the control actuator (16) to the spacer element (10), or
wherein the control mechanism comprises a **gearwheel** (24) driveable by the control actuator, and additionally a **toothed rack** (25), in which the gearwheel engages,
wherein the toothed rack is connected to the spacer element (10) such that the force to change the spacer element distance is transmittable to the spacer element (10) by the toothed rack (25), or
wherein the control mechanism comprises a **worm gear** (26), which is driveable by the control actuator, and a worm shaft (27), in which the worm gear engages, wherein the worm shaft is connected to the spacer element (10) such that the force to change the spacer element distance is transmittable to the spacer element (10) by the worm shaft (27), or
wherein the control actuator (16) comprises a rotary drive, a **spindle shaft** (13) rotatable by the rotary drive, and a spindle nut (12) running on the spindle shaft,
wherein the extremity support device further comprises a chain (29) of at least two links connected to one another via connection joints, of which a first of the links acts on the spindle nut (12) and a last of the links acts on the spacer element (10),
wherein preferably the links at the connection joints are in each case guided in at least one rail (28).

10. The extremity support device according to any one of the preceding claims,
wherein the control actuator (16) comprises a rotary drive and a **shaft,** which are arranged adjacently and with axes of rotation parallel to one another, and which are kinematically connected to one another via a gear mechanism, and/or
wherein the control actuator comprises at least one hydraulic cylinder, and/or wherein the extremity support device comprises a displacement element attached to the extremity lever,
wherein the **pull transmission element** (7) is fixedly connected by one of its ends to the **displacement element,** wherein the displacement element, in a plane that is perpendicular to the axis of rotation, is displaceable on the extremity lever along a longitudinal direction of the extremity lever and/or in a direction perpendicular to the longitudinal direction of the extremity lever.

11. The extremity support device according to any one of the preceding claims, comprising a **switch** and/or a slide controller by means of which the spacer element distance (H1) is adjustable, and/or
comprising a **proximity sensor,** a force sensor and/or a pressure sensor, which is configured to detect a weight of a load to be picked up, wherein the control mechanism is configured to adjust the spacer element distance (H1) based on the detected weight, and/or
comprising a **muscle activity signal sensor,** by means of which activity signals of at least one muscle of the extremity are measurable, wherein the control mechanism is configured to adjust the spacer element distance (H1) based on the measured activity signal.

12. The extremity support device according to any one of the preceding claims, wherein the extremity is an arm of the user and the extremity support device is an arm support device or a shoulder support device, and/or
wherein the **pull transmission element** (7) is secured to the extremity lever (5) on the side of the extremity lever which is located opposite the engagement unit connection element (4.1) in relation to the swivel joint (2), and/or
wherein the pull transmission element (7) and/or the control pull transmission element (19) comprises or is at least one cable and/or at least one chain and/or at least one belt.

13. A **method** for lifting, holding and/or carrying a load and/or for carrying out overhead activities, wherein a user wears an extremity support device according to any one of the preceding claims, and, with support from the extremity support device, lifts the load, holds it and/or carries it and/or carries out an activity with their hands raised above the height of the head.

14. The method according to the preceding claim, wherein the spacer element distance prior to and/or while lifting, holding or carrying and/or carrying out the activity with the hands raised above the height of the head is set to a first value, the user thereafter lifts the load, holds it, carries it and/or carries out the activity with the hands raised above the height of the head, the user then sets the load down, and thereafter the spacer element distance is set to a second value, which is smaller than the first value,
wherein preferably while the spacer element distance is set to the first value the control actuator (16) is activated, preferably is acted on by a voltageand for setting to the second value is deactivated, preferably with the voltage being canceled,
wherein preferably the control actuator (16) comprises a rotary drive, a linearization mechanism, by means of which a torque produced by the rotary drive is transformable into the force for changing the spacer element distance, and also a coupling (18), by means of which the transformation of the torque into the force is establishable and releasable,
wherein, before the spacer element distance is set to the first value, the transformation of the torque into the force between the rotary drive (16) and the spacer element (10) is established by means of the coupling, and wherein for setting the spacer element distance to the second value the transformation of the torque into the force by the coupling is released .

15. The method according to any one of claims 13 and 14,
wherein the control mechanism comprises at least one blocking element (17), by means of which the spacer element distance (H1) of the spacer element (10) from the swivel joint is fixable,
wherein the spacer element distance is fixed by means of the blocking element after the spacer element distance has been set to the first value, and wherein the blocking element is released for setting the spacer element distance to the second value, and/or
wherein the control actuator (16) comprises a rotary drive, a linearization mechanism by means of which a torque produced by the rotary drive is transformable into the force for changing the spacer element distance, and also a coupling (18) by means of which the transformation of the torque into the force is establishable and releasable, and
wherein the control mechanism comprises at least one blocking element (17), by means of which the spacer element distance (H1) of the spacer element (10) from the swivel joint is fixable,
wherein the transformation of the torque into the force between the rotary drive (16) and the spacer element (10) is established by means of the coupling before the spacer element distance is set to the first value,
wherein the spacer element distance is fixed by means of the blocking element after the spacer element distance has been set to the first value, and wherein the blocking element and the coupling are released for setting the spacer element distance to the second value.

## Revendications

1. Dispositif d'assistance de membre permettant d'assister un membre d'un utilisateur, présentant
un élément de mise en prise de membre (4) conçu pour venir en prise avec le membre de l'utilisateur,
un levier de membre (5) auquel l'élément de mise en prise de membre (4) est relié par l'intermédiaire d'un élément de liaison de mise en prise (4.1),
une articulation pivotante (2) autour de laquelle peut tourner le levier de membre (5),
un élément de transmission de traction (7) qui vient en prise au niveau du levier de membre (5) sur un côté du levier de membre opposé à l'élément de liaison de mise en prise (4.1) par rapport à l'articulation pivotante (2),
un **élément d'espacement** (10) qui limite une distance entre l'élément de transmission de traction (7) et l'articulation pivotante (2) au niveau du point de contact de l'élément de transmission de traction (7) avec l'élément d'espacement (10) dans au moins une direction, dans lequel
l'élément d'espacement (10) peut être déplacé au moyen d'un **mécanisme de réglage** afin de modifier une distance d'élément d'espacement (H1) de l'élément d'espacement par rapport à l'articulation pivotante (2),
dans lequel le mécanisme de réglage présente un **actionneur de réglage** (16) au moyen duquel une force permettant de modifier la distance d'élément d'espacement (H1) peut être exercée sur l'élément d'espacement (10).

2. Dispositif d'assistance de membre selon la revendication précédente,
dans lequel une extrémité, ne venant pas en prise avec le levier de membre (5), de l'élément de transmission de traction (7) vient en prise avec un **actionneur passif** (6) conçu pour exercer une force de traction sur l'élément de transmission de traction (7), dans lequel la force de traction peut être transférée au levier de membre (5) grâce à l'élément de transmission de traction, et/ou
présentant en outre un **module de torse** (1) conçu pour venir en prise au niveau du torse, de manière préférée au niveau du bassin, de l'utilisateur, dans lequel le mécanisme de réglage est agencé au niveau du module de torse, dans lequel le levier de membre (5) peut tourner autour de l'articulation pivotante (2) par rapport au module de torse (1).

3. Dispositif d'assistance de membre selon l'une quelconque des revendications précédentes,
présentant un **élément de guidage** (9) le long duquel l'élément d'espacement (10) peut être déplacé afin de modifier la distance d'élément d'espacement, dans lequel de manière préférée l'élément de guidage (9) est immobilisé ou peut être immobilisé par rapport au mécanisme de réglage et/ou dans lequel le levier de membre (5) peut tourner par rapport à l'élément de guidage (9), dans lequel 'élément de guidage (9) est de manière préférée relié au mécanisme de réglage par l'intermédiaire d'une **articulation de guidage,** dans lequel l'articulation de guidage présente un dispositif de verrouillage grâce auquel la rotation de l'élément de guidage (9) autour de l'articulation de guidage peut être verrouillée, dans lequel l'élément de guidage (9) présente de manière préférée un **rail** grâce auquel l'élément d'espacement (10) est guidé, dans lequel le rail est droit ou courbé, de manière préférée courbé de manière monotone.

4. Dispositif d'assistance de membre selon l'une quelconque des revendications précédentes, dans lequel l'élément d'espacement (10) limite la distance entre l'élément de transmission de traction (7) et l'articulation pivotante (2) **dans une direction d'éloignement par rapport à l'articulation pivotante,** et dans lequel la force qui peut être exercée sur l'élément d'espacement (10) par le mécanisme de réglage peut être utilisée pour modifier la distance d'élément d'espacement dans une direction de rapprochement par rapport à l'articulation pivotante, et/ou
dans lequel l'élément d'espacement (10) limite la distance entre l'élément de transmission de traction (7) et l'articulation pivotante **dans la direction de l'articulation pivotante,** et dans lequel la force pouvant être exercée sur l'élément d'espacement (10) par le mécanisme de réglage peut être utilisée pour modifier la distance d'élément d'espacement dans la direction d'éloignement par rapport à l'articulation pivotante.

5. Dispositif d'assistance de membre selon l'une quelconque des revendications précédentes, dans lequel l'élément de transmission de traction (7) présente un **premier sous-élément de transmission de traction (7.1) et un deuxième sous-élément de transmission de traction** (7.2),
dans lequel les premier et deuxième sous-éléments de transmission de train font passer l'élément d'espacement (10) sur des côtés opposés, dans lequel les premier et deuxième sous-éléments de transmission de traction sont dimensionnés de sorte que, dans chaque position du levier de membre (5), au moins un des sous-éléments de transmission de traction est en contact avec l'élément d'espacement (10), et/ou
dans lequel l'élément d'espacement (10) présente **respectivement un rouleau pour chaque direction** pour laquelle il limite la distance entre l'élément de transmission de traction (7) et l'articulation pivotante (2), dans lequel l'élément de transmission de traction (7) est en contact avec le rouleau respectif, lorsque celui-ci limite la distance, au niveau du côté qui est opposé à la direction dans laquelle le rouleau respectif limite la distance entre l'élément de transmission de traction (7) et l'articulation pivotante, et/ou
dans lequel l'articulation pivotante (2) est reliée au mécanisme de réglage ou au module de torse (1) de manière solidaire par l'intermédiaire d'un **élément de liaison (3),** dans lequel l'élément de liaison (3) est conçu de sorte qu'il s'étend **le long du torse** de l'utilisateur lorsque le dispositif d'assistance de membre est porté comme prévu par l'utilisateur, dans lequel une direction d'application de force de l'actionneur de réglage (16) s'étend de manière parallèle au parcours de l'élément de liaison.

6. Dispositif d'assistance de membre selon l'une quelconque des revendications précédentes, dans lequel **l'actionneur de réglage (16)** est agencé **au niveau du levier de membre (5) du même côté,** par rapport à l'articulation pivotante (2), **que l'élément de mise en prise de membre,** dans lequel une direction d'application de force de l'actionneur de réglage est parallèle à une direction longitudinale du levier de membre là où l'actionneur de réglage est agencé, et/ou
dans lequel l'actionneur de réglage (16) présente un **entraînement rotatif,** un arbre de broche (13) pouvant tourner grâce à l'entraînement rotatif et un écrou de broche (12) s'étendant sur l'arbre de broche, dans lequel la force peut être exercée sur l'élément d'espacement (10) par **l'écrou de broche** (12), et/ou
le **mécanisme de réglage** présente au moins un **élément élastique,** de manière préférée au moins un élément à ressort (11) qui est agencé de manière à pouvoir être dévié par l'actionneur de réglage (16) et qui exerce une force dirigée dans la direction opposée à la force pouvant être exercée par l'actionneur de réglage et provoquant la modification de la distance d'élément d'espacement (H1), et/ou
dans lequel l'actionneur de réglage (16) présente un entraînement rotatif, un **mécanisme de linéarisation** grâce auquel un couple exercé par l'entraînement rotatif peut être transmis dans la force permettant de modifier la distance d'élément d'espacement, et présente un accouplement (18) grâce auquel la transmission du couple dans la force peut être produite et interrompue.

7. Dispositif d'assistance de membre selon l'une quelconque des revendications précédentes, dans lequel le mécanisme de réglage présente au moins un **élément de blocage** (17) grâce auquel la distance d'élément d'espacement (H1) entre l'élément d'espacement (10) et l'articulation pivotante peut être figée, et/ou
dans lequel le mécanisme de réglage présente un premier **élément de transmission de traction de réglage (19),** dans lequel le premier élément de transmission de traction de réglage est **relié** d'une part à **l'actionneur de réglage** (16) de telle manière qu'une force de traction peut être exercée sur le premier élément de transmission de traction de réglage (19) par l'actionneur de réglage (16), et dans lequel le premier élément de transmission de traction de réglage (19) est d'autre part **en contact** avec **l'élément d'espacement** (10) de telle manière que la force permettant de modifier la distance d'élément d'espacement peut être exercée sur l'élément d'espacement (10) par le premier élément de transmission de traction de réglage (19),
dans lequel, de manière préférée, le premier élément de transmission de traction de réglage (19) traverse au moins un **élément de déviation** (20) lors de son parcours entre l'actionneur de réglage (16) et l'élément d'espacement (10) et modifie la direction de son parcours en direction de l'élément d'espacement de manière préférée au niveau de celui parmi les au moins un élément de déviation (20) qui est le plus proche de l'élément d'espacement le long de la course de l'élément de transmission de traction de réglage,
dans lequel l'élément de transmission de traction de réglage (19) est de manière préférée guidé dans une gaine de câble Bowden (119) au moins sur une partie de son parcours.

8. Dispositif d'assistance de membre selon l'une quelconque des revendications 2 à 7, dans lequel l'actionneur de réglage (16) est agencé au niveau du module de torse de sorte qu'il est agencé sur le dos de l'utilisateur lorsque le dispositif d'assistance de membre est utilisé comme prévu par l'utilisateur, et/ou
présentant un **élément de transmission de traction de réglage (19.1, 19.2) supplémentaire** qui est en contact avec l'élément d'espacement (10) sur un **côté** de l'élément d'espacement (10) **opposé** au premier élément de transmission de traction de réglage (19.1, 19.2) et qui est relié à l'actionneur de réglage (16) de telle manière qu'une force de traction peut être exercée grâce à l'actionneur de réglage (16) sur l'élément de transmission de traction de réglage (19.1, 19.2) supplémentaire, laquelle force est dirigée à **l'encontre de la force de traction** pouvant être exercée sur le premier élément de transmission de traction de réglage (19.1, 19.2), dans lequel de manière préférée l'élément de transmission de traction de réglage (19.1, 19.2) franchit au moins un élément de déviation (20.1, 20.2, 20.3) supplémentaire lors de son parcours entre l'actionneur de réglage (16) et l'élément d'espacement (10) et, au niveau de l'élément de déviation (20.1, 20.2, 20.3) supplémentaire, modifie la direction de son parcours en direction de l'élément d'espacement,
dans lequel l'actionneur de réglage (6) présente de manière préférée un **entraînement rotatif** et un **rouleau** pouvant être entraîné en rotation par l'entraînement rotatif, dans lequel l'élément de transmission de traction de réglage (19) est fixé à une surface du rouleau de manière à pouvoir être enroulé sur le rouleau et/ ou déroulé du rouleau en faisant tourner le rouleau, dans lequel le rouleau est de manière préférée relié à l'entraînement rotatif par l'intermédiaire d'un accouplement.

9. Dispositif d'assistance de membre selon l'une quelconque des revendications 1 à 7, dans lequel l'élément d'espacement (10) est agencé de manière solidaire **directement sur l'actionneur de réglage** (16), ou
dans lequel le mécanisme de réglage présente une liaison par **engrenage conique** (21) au sein de laquelle un premier engrenage conique peut être entraîné par l'actionneur de réglage et un deuxième engrenage conique est relié à une broche grâce à la rotation de laquelle la force permettant de modifier la distance d'élément d'espacement peut être exercée sur l'élément d'espacement (10), ou
dans lequel le mécanisme de réglage présente une **liaison universelle** (22) grâce à laquelle la force permettant de modifier la distance d'élément d'espacement peut être transmise à l'élément d'espacement (10) par l'actionneur de réglage (16), ou
dans lequel le mécanisme de réglage présente un **engrenage** (24) pouvant être entraîné par l'actionneur de réglage, et présente une **crémaillère** (25) dans laquelle l'engrenage vient en prise,
dans lequel la crémaillère est reliée à l'élément d'espacement (10) de sorte que la force permettant de modifier la distance d'élément d'espacement peut être transmise à l'élément d'espacement (10) par la crémaillère (25), ou
le mécanisme de réglage présente une **roue à vis sans fin** (26) pouvant être entraînée par l'actionneur de réglage, et présente un arbre de vis sans fin (27) avec lequel la roue à vis sans fin vient en prise, dans lequel l'arbre de vis sans fin est relié à l'élément d'espacement (10) de sorte que la force permettant de modifier la distance d'élément d'espacement peut être transmise à l'élément d'espacement (10) par l'arbre de vis sans fin (25), ou
dans lequel l'actionneur de réglage (16) présente un entraînement rotatif, un **arbre de broche** (13) pouvant tourner grâce à l'entraînement rotatif et un écrou de broche (12) s'étendant sur l'arbre de broche,
dans lequel le dispositif d'assistance de membre présente en outre une chaîne (29) constituée d'au moins deux maillons reliés l'un à l'autre par l'intermédiaire d'articulations de liaison, parmi lesquels un premier des maillons vient en prise au niveau de l'écrou de broche (12) et un dernier des maillons vient en prise au niveau de l'élément d'espacement (10),
dans lequel les maillons sont de manière préférée guidés au niveau des articulations de liaison respectivement dans au moins un rail (28).

10. Dispositif d'assistance de membre selon l'une quelconque des revendications précédentes,
dans lequel l'actionneur de réglage (16) présente un entraînement rotatif et un **arbre** qui sont agencés l'un à côté de l'autre avec leurs axes de rotation parallèles entre eux et qui sont reliés cinématiquement l'un à l'autre par l'intermédiaire d'une transmission à engrenages, et/ou
dans lequel l'actionneur de réglage présente au moins un vérin hydraulique, et/ou dans lequel le dispositif d'assistance de membre présente un élément de déplacement mis en place au niveau du levier de membre,
dans lequel l'**élément de transmission de traction** (7) est relié de manière solidaire par une de ses extrémités à l**'élément de déplacement,** dans lequel l'élément de déplacement peut être déplacé au niveau du levier de membre dans un plan perpendiculaire à l'axe de rotation le long d'une direction longitudinale du levier de membre et/ou dans une direction perpendiculaire à la direction longitudinale du levier de membre.

11. Dispositif d'assistance de membre selon l'une quelconque des revendications précédentes, présentant un **interrupteur** et/ou un curseur au moyen duquel la distance d'élément d'espacement (H1) peut être ajustée, et/ou
présentant un **capteur de proximité,** un capteur de force et/ou un capteur de pression, conçu pour détecter le poids d'une charge à accueillir, dans lequel le mécanisme de réglage est conçu pour ajuster la distance d'élément d'espacement (H1) en se basant sur le poids détecté, et/ou
présentant un **capteur de signal d'activité musculaire** grâce auquel des signaux d'activité d'au moins un muscle du membre peuvent être mesurés, dans lequel le mécanisme de réglage est conçu pour ajuster la distance d'élément d'espacement (H1) en se basant sur le signal d'activité mesuré.

12. Dispositif d'assistance de membre selon l'une quelconque des revendications précédentes, dans lequel le membre est un **bras** de l'utilisateur et le dispositif d'assistance de membre est un dispositif d'assistance de bras ou un dispositif d'assistance d'épaule, et/ou
dans lequel l'**élément de transmission de traction** (7) est fixé au levier de membre (5) du côté du levier de membre qui est opposé à l'élément de liaison de mise en prise (4.1) par rapport à l'articulation pivotante (2), et/ou
dans lequel l'élément de transmission de traction (7) et/ou l'élément de transmission de traction de réglage (19) présente ou est au moins un câble et/ou au moins une chaîne et/ou au moins une courroie.

13. **Procédé** pour soulever, retenir et/ou porter une charge et/ou pour mettre en œuvre des activités au-dessus de la tête, dans lequel un utilisateur porte un dispositif d'assistance de membre selon l'une quelconque des revendications précédentes et, avec l'assistance du dispositif d'assistance de membre, soulève, retient et/ou porte la charge et/ou met en œuvre une activité avec les mains levées au-dessus de la hauteur de tête.

14. Procédé selon la revendication précédente, dans lequel la distance d'élément d'espacement est ajustée à une première valeur avant et/ou pendant le levage, la tenue, le transport et/ou la mise en œuvre de l'activité avec les mains levées au-dessus de la hauteur de tête, puis l'utilisateur soulève, retient, porte la charge et/ou met en œuvre l'activité avec les mains levées au dessus de la hauteur de tête, l'utilisateur dépose alors la charge, puis la distance d'élément d'espacement est ajustée à une deuxième valeur inférieure à la première valeur,
dans lequel l'actionneur de réglage (16) est activé, de manière préférée est alimenté en tension, de manière préférée pendant que la distance d'élément d'espacement est ajustée sur la première valeur, et il est désactivé, de manière préférée la tension est coupée, en vue de l'ajustement sur la deuxième valeur,
dans lequel l'actionneur de réglage (16) présente un entraînement rotatif, un mécanisme de linéarisation grâce auquel un couple exercé par l'entraînement rotatif peut être transmis dans la force permettant de modifier la distance d'élément d'espacement, et présente un accouplement (18) grâce auquel la transmission du couple dans la force peut être produite et interrompue,
dans lequel, avant d'ajuster la distance d'élément d'espacement à la première valeur, la transmission du couple dans la force entre l'entraînement rotatif (16) et l'élément d'espacement (10) est produite grâce à l'embrayage, et dans lequel, afin d'ajuster la distance d'élément d'espacement à la deuxième valeur, la transmission du couple dans la force est interrompue par l'embrayage.

15. Procédé selon l'une des revendications 13 et 14,
dans lequel le mécanisme de réglage présente au moins un élément de blocage (17) grâce auquel la distance d'élément d'espacement (H1) de l'élément d'espacement (10) par rapport à l'articulation pivotante peut être figée,
dans lequel après l'ajustement de la distance d'élément d'espacement à la première valeur, la distance d'élément d'espacement est figée grâce à l'élément de blocage, et dans lequel l'élément de blocage est libéré afin d'ajuster la distance d'élément d'espacement à la deuxième valeur, et/ou
dans lequel l'actionneur de réglage (16) présente un entraînement rotatif, un mécanisme de linéarisation grâce auquel un couple exercé par l'entraînement rotatif peut être transmis dans la force permettant de modifier la distance d'élément d'espacement, et présente un accouplement (18) grâce auquel la transmission du couple dans la force peut être produite et interrompue, et
dans lequel le mécanisme de réglage présente au moins un élément de blocage (17) grâce auquel la distance d'élément d'espacement (H1) de l'élément d'espacement (10) par rapport à l'articulation pivotante peut être figée,
dans lequel, avant l'ajustement de la distance d'élément d'espacement à la première valeur, la transmission du couple est transmise dans la force entre l'entraînement rotatif (16) et l'élément d'espacement (10) grâce à l'accouplement,
dans lequel, après l'ajustement de la distance d'élément d'espacement à la première valeur, la distance d'élément d'espacement est figée grâce à l'élément de blocage, et dans lequel l'élément de blocage et le couplage sont libérés afin d'ajuster la distance d'élément d'espacement à la seconde valeur.
